(19) Europäisches Patentamt
European Patent Office
Office européen des brevets

(11) Veröffentlichungsnummer: **0 138 767**
**A1**

(12) # EUROPÄISCHE PATENTANMELDUNG

(21) Anmeldenummer: **84810483.2**

(22) Anmeldetag: **05.10.84**

(51) Int. Cl.[4]: **C 08 K 5/00**, C 08 K 5/32, C 08 K 5/34, C 08 L 23/02

(30) Priorität: **11.10.83 US 540732**
**23.07.84 US 633549**

(43) Veröffentlichungstag der Anmeldung: **24.04.85**
**Patentblatt 85/17**

(84) Benannte Vertragsstaaten: **BE DE FR GB IT NL SE**

(71) Anmelder: **CIBA-GEIGY AG, Postfach, CH-4002 Basel (CH)**

(72) Erfinder: **Seltzer, Raymond, 11 Angus Lane, New City New York 10956 (US)**
Erfinder: **Patel, Ambelal R., 114 Huntley Drive, Ardsley New York 10502 (US)**
Erfinder: **Stewart, Peter W., 238 Juniper Drive, Yorktown Heights New York 10598 (US)**
Erfinder: **White, Charlene, 3212 Wickham Avenue, Bronx New York 10469 (US)**

(54) **Stabilisierte polyolefinische Zusammensetzungen enthaltend hydroxylaminderivate.**

(57) N,N-Dibenzylhydroxylamine oder andere Hydroxylaminderivate stabilisieren Polyolefine, die weitere Stabilisatoren oder Stabilisatormischungen wie beispielsweise phenolische Antioxidantien, sterisch gehinderte Amine, Ultraviolettabsorber, organische Phosphorverbindungen, Metallsalze von Fettsäuren oder Thiosynergisten enthalten. Die erfindungsgemässen Zusammensetzungen sind verarbeitungs- und lagerstabil; weiterhin sind sie resistent gegen Gammastrahlung und gegen Verbrennungsprodukte von Erdgas.

EP 0 138 767 A1

CIBA-GEIGY
Basel (Schweiz)

3-14606/=

# Stabilisierte polyolefinische Zusammensetzungen enthaltend Hydroxylaminderivate

Die vorliegende Erfindung betrifft polyolefinische Zusammensetzungen enthaltend einen Stabilisator oder eine Stabilisatormischung aus der Gruppe der phenolischen Antioxidantien, der sterisch gehinderten Amine, der Ultraviolettabsorber, der organischen Phosphorverbindungen der Metallsalze von Fettsäuren oder der Thiosynergisten und enthaltend weiterhin N,N-Dibenzylhydroxylamin oder andere ausgewählte Hydroxylaminderivate.

Obwohl phenolische Antioxidantien schon seit langem als sehr effektive Stabilisatoren für Polyolefine bekannt sind und kommerziell verwendet werden, besitzen die solchermassen stabilisierten Polyolefine eine ausgeprägte Tendenz zur Verfärbung, wenn sie hoch erhitzt werden oder wenn sie Verbrennungsprodukten von Erdgas ausgesetzt werden.

Durch gleichzeitige Verwendung von organischen Phosphiten lässt sich die Verfärbung von Polyolefinzusammensetzungen abschwächen, sie bleibt jedoch ein ernstzunehmendes Problem bei praktischen Anwendungen.

Aehnlich verhalten sich polyolefinische Zusammensetzungen, die phenolische Antioxidantien und sterisch gehinderte Amine als Lichtstabilisatoren enthalten. Sie neigen bei längerer Lagerung sogar bei Raumtemperatur zur Verfärbung.

Organische Hydroxylaminderivate wie beispielsweise N,N-Dibenzylhydroxylamin sind bekannt und kommerziell erhältlich.

In den US-PS 3,644,278 und 3,778,464 wird die Verwendung von substituierten Hydroxylaminen unterschiedlicher Strukturen als antioxidativ wirksame Stabilisatoren für Kohlenwasserstoffe und insbesondere für Polyolefine beschrieben. Die Verwendung solcher Hydroxylamine in Kombination mit phenolischen Antioxidantien oder in Kombination mit organischen Phosphorverbindungen, Ultraviolettabsorbern, Thiosynergisten oder sterisch gehinderten Aminen wird jedoch nicht vorgeschlagen.

In der US-PS 3,408,422 wird die Verwendung von ausgewählten Hydroxylaminderivaten in ungesättigten Polyestern vorgeschlagen, um die vorzeitige Gelbildung bei der Lagerung zu unterbinden.

In der US-PS 3,926,909 wird die Anwendung von substituierten Hydroxylaminen in Polyurethanen (Spandex) beschrieben, um Verfärbungen durch Licht, Rauch oder Abgase zu vermeiden.

Die US-PS 4,242,224 lehrt die Verwendung von Dialkylhydroxylaminen oder Merkaptanen als Stabilisatoren in aminhaltigen Antioxidans- oder Antiozonemulsionen zur Vermeidung einer blassroten Verfärbung, wie sie in solchen Emulsionen bei hohem pH-Wert auftaucht.

Die US-PS 4,316,996 beschreibt ein Verfahren zur Herstellung von phenolischen Antioxidantien in Gegenwart eines Hydroxylaminderivates und eines substituierten Oxims. Das Produkt ist ein phenolisches Antioxidans, das zu einer guten Farbe bzw. Farbstabilität der behandelten Substrate führt. Es wird ausgeführt, dass solche Antioxidantien, in Kautschuk eingearbeitet, zu einer Reduzierung der Verfärbung des Kunststoffs führen. Die erfindungsgemässen Zusammensetzungen werden nicht beschrieben.

Die US-PS 3,432,578 betrifft Zusammensetzungen enthaltend Polymere aus konjugierten Dienen und Diaryl- oder Diaralkylhydroxylamine als Stabilisatoren gegen die Einwirkungen von ultraviolettem Licht. Die Verwendung von N,N-Dibenzylhydroxylamin wird vorgeschlagen. Es wird auch festgestellt, dass Dialkylhydroxylamine als Stabilisatoren in diesen Polymeren völlig inaktiv sind. In diesem Patent wird vorgeschlagen, andere Stabilisatortypen in Kombination mit Hydroxylaminen zu verwenden, und in Tabelle I wird eine stabilisierte Zusammensetzung enthaltend das Polymer eines konjugierten Diens, phenolische Antioxidantien und N,N-Dibenzylhydroxylamin beschrieben. Eine solche Zusammensetzung ist stabilisiert gegen die Einwirkungen von ultraviolettem Licht.

In der US-PS 4,386,224 wird die Anwendung von N,N-Diethylhydroxylamin als Farbstabilisator für Monoalkylphenole wie beispielsweise Nonyl- oder Dodecylphenol beschrieben.

Gegenstand der vorliegenden Erfindung sind polyolefinische Zusammensetzungen enthaltend einen Stabilisator oder eine Stabilisatormischung ausgewählt aus der Gruppe der phenolischen Antioxidantien, der sterisch gehinderten Amine, der Ultraviolettabsorber, der organischen Phosphorverbindungen, der Metallsalze von Fettsäuren oder der Thiosynergisten und enthaltend mindestens ein Hydroxylaminderivat; wobei die erfindungsgemässen Zusammensetzungen insbesondere gegen die Verfärbung stabilisiert sind, die beispielsweise bei der Hochtemperaturverarbeitung, der Langzeitlagerung (bei Raumtemperatur) oder beim Kontakt mit Verbrennungsprodukten entsteht.

Dabei lassen sich vorteilhafterweise folgende Stabilisatorkombinationen verwenden:
- phenolisches Antioxidans und Hydroxylaminderivat
- phenolisches Antioxidans, sterisch gehindertes Amin und Hydroxylaminderivat
- phenolisches Antioxidans, organische Phosphorverbindung und Hydroxylaminderivat

- phenolisches Antioxidans, Ultraviolettabsorber und Hydroxylaminderivat
- phenolisches Antioxidans, Ultraviolettabsorber, organische Phosphorverbindung und Hydroxylaminderivat
- phenolisches Antioxidans, sterisch gehindertes Amin, organische Phosphorverbindung und Hydroxylaminderivat
- phenolisches Antioxidans, sterisch gehindertes Amin, Ultraviolettabsorber und Hydroxylaminderivat
- phenolisches Antioxidans, sterisch gehindertes Amin, organische Phosphorverbindung, Thiosynergist und Hydroxylaminderivat
- sterisch gehindertes Amin und Hydroxylaminderivat
- phenolisches Antioxidans, Thiosynergist und Hydroxylaminderivat.
- Metallsalz einer Fettsäure und Hydroxylaminderivat
- phenolisches Antioxidans, Metallsalz einer Fettsäure und Hydroxylaminderivat.

Die vorliegende Erfindung betrifft stabilisierte Zusammensetzungen enthaltend:

a) ein gesättigtes Polyolefin oder eine Mischung solcher Polyolefine,
b) mindestens einen Stabilisator oder ein Stabilisatorgemisch aus der Gruppe der phenolischen Antioxidantien, der sterisch gehinderten Amine, der Ultraviolettabsorber, der organischen Phosphorverbindungen, der Metallsalze von Fettsäuren oder der Thiosynergisten, sowie
c) mindestens ein Hydroxylaminderivat oder ein Gemisch solcher Derivate, mit der Massgabe, dass die Komponenten (b) und (c) nicht identisch sind.

Die erfindungsgemässe Zusammensetzung ist gegen Abbau und/oder Verfärbung stabilisiert, der (die) bei erhöhten Temperaturen oder bei Kontaktierung mit Verbrennungsprodukten von Erdgas, sowie bei längerer Lagerung oder bei Einwirkung von Gammastrahlung eintritt.

Insbesondere betrifft die Erfindung die obenerwähnten stabilisierten Zusammensetzungen, bei denen ein Hydroxylaminderivat gemäss einer der Formeln I bis XIV verwendet wird

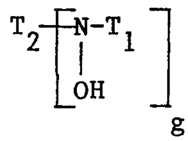

(I),

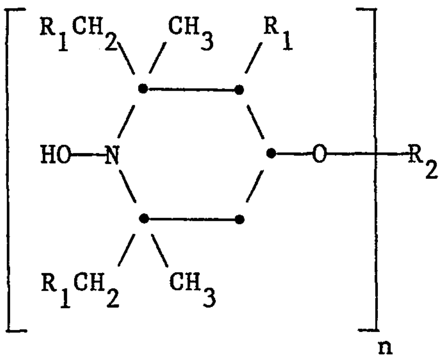

(II),

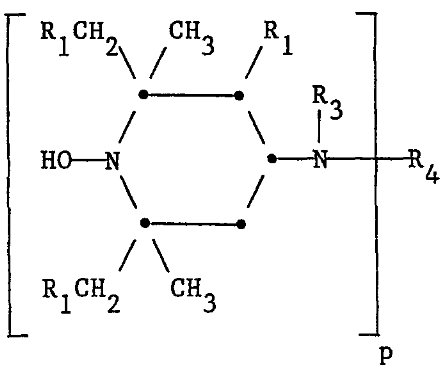

(III),

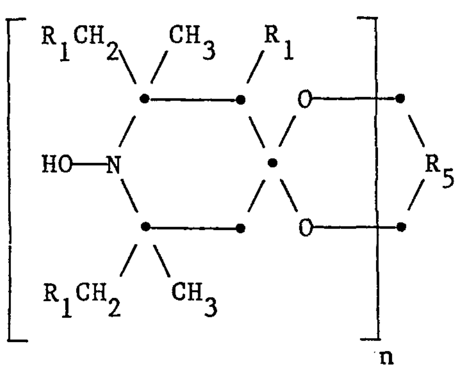

(IV),

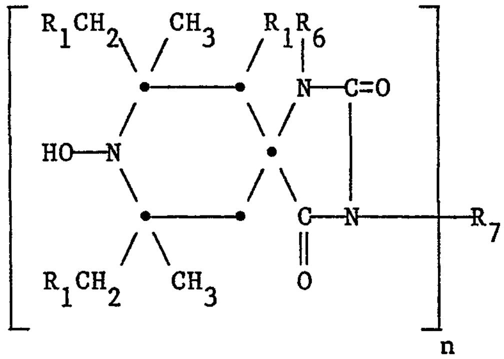

(V),

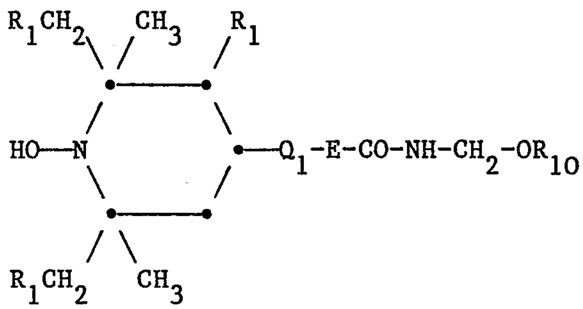

(VI)

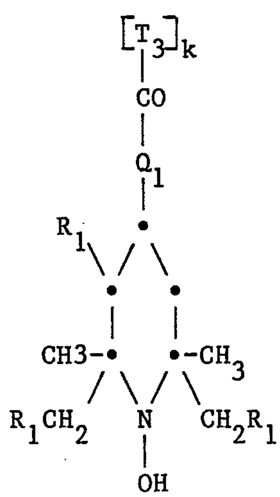

(VII),

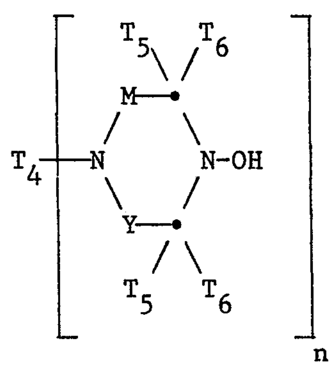

(VIII),

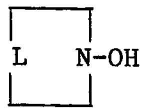

(IX),

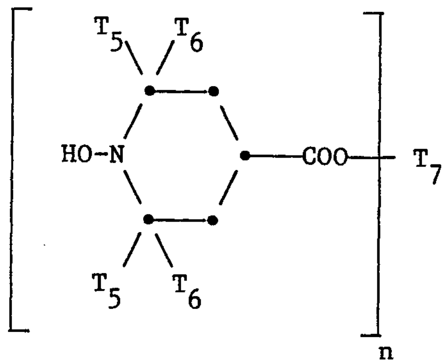

(X)

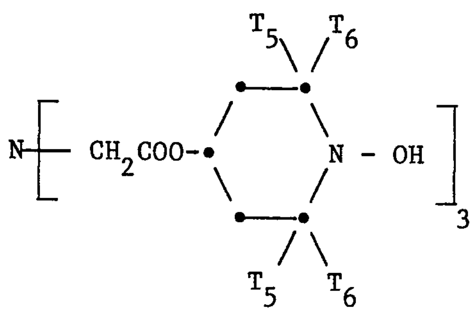

(XI),

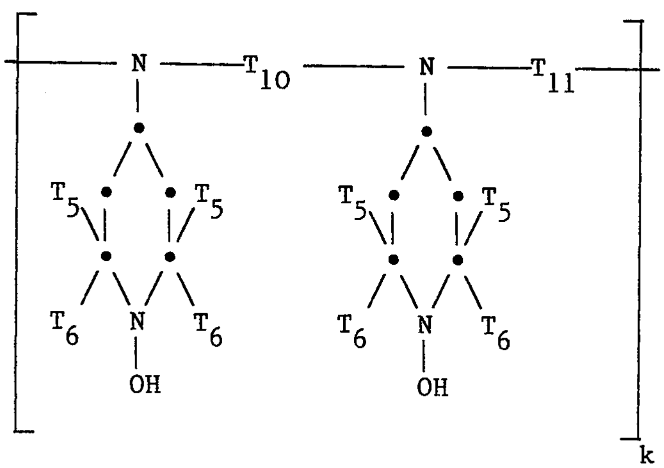

(XII),

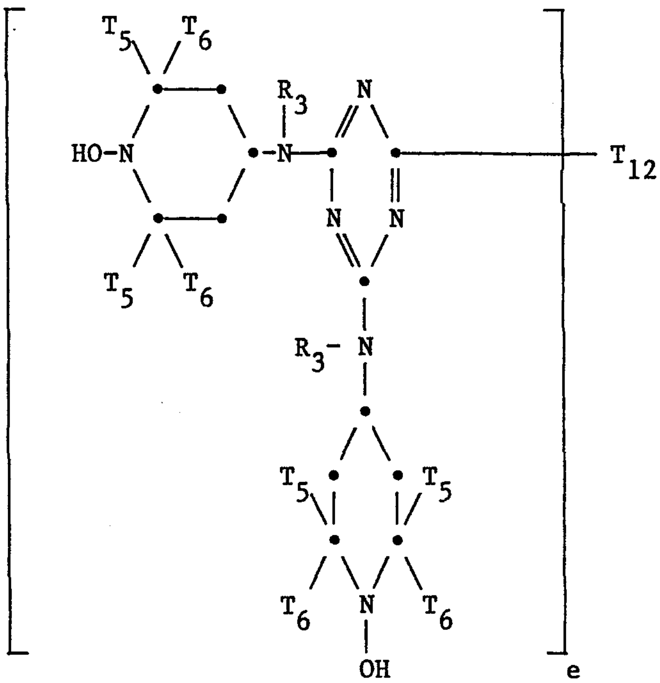

(XIII), oder

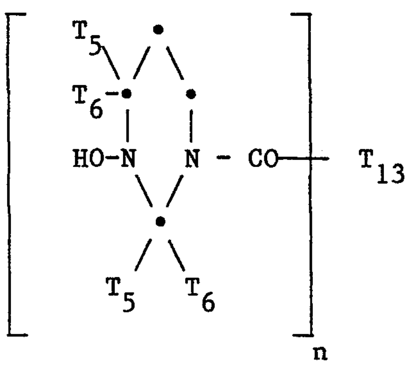

(XIV),

worin $T_1$ $C_1$-$C_{36}$Alkyl, $C_5$-$C_{12}$Cycloalkyl, $C_7$-$C_9$Aralkyl, das gegebenenfalls mit $C_1$-$C_4$Alkyl oder mit ein oder zwei Halogenatomen substituiert ist, bedeutet, oder worin

g 1, 2, 3 oder 4 bedeutet;

worin $T_2$, im Falle von g=1, Wasserstoff bedeutet oder eine der für $R_1$ angegebenen Bedeutungen besitzt;

worin $T_2$, im Falle von g=2, $C_2$-$C_{12}$Alkylen, $C_6$-$C_{10}$Cycloalkylen. $C_6$-$C_{10}$Arylen, $C_8$-$C_{10}$Alkylenarylenalkylen bedeutet oder ein Rest

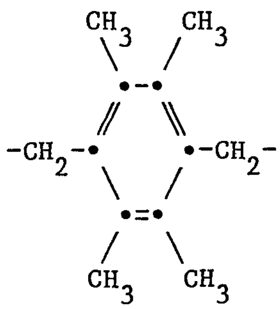

ist;

worin $T_2$, im Falle von g=3, $C_3$-$C_6$Alkantriyl oder ein Rest

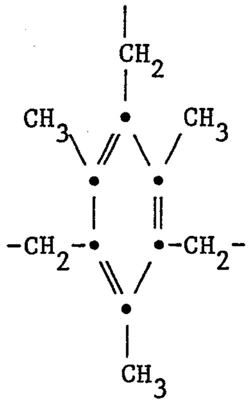

ist;

worin $T_2$, im Falle von g=4, $C_4$-$C_6$Alkantetrayl bedeutet; und worin

$R_1$ Wasserstoff oder Methyl ist,

n 1 oder 2 bedeutet;

$R_2$, im Falle von n=1, Wasserstoff oder $C_1$-$C_{18}$Alkyl ist, das gegebenenfalls durch ein oder mehrere Sauerstoffatome unterbrochen sein kann, wobei mehrere Sauerstoffatome jedoch nicht in direktem Kontakt stehen, oder worin $R^2$, im Falle von n=1, Cyanethyl, Benzyl, Glycidyl, ein monovalenter aliphatischer, cycloaliphatischer, araliphatischer oder aromatischer Acylrest, ein monovalenter Acylrest einer Carbamidsäure, ein monovalenter Rest einer phosphorhaltigen Säure oder ein monovalentes Silylradikal ist, besonders bevorzugt jedoch ein monovalenter aliphatischer $C_2$-$C_{18}$Acylrest, ein cycloaliphatischer $C_5$-$C_{12}$Acylrest oder ein aromatischer $C_7$-$C_{15}$Acylrest; oder worin

$R_2$, im Falle von n=2, $C_1$-$C_{12}$Alkylen, $C_4$-$C_{12}$Alkenylen, Xylylen, ein aliphatischer, cycloaliphatischer, araliphatischer oder aromatischer

Diacylrest oder Dicarbamoylrest ist, oder ein divalenter Rest einer phosphorhaltigen Säure ist, oder ein divalenter Silylrest bedeutet, besonders bevorzugt jedoch ein aliphatischer $C_2$-$C_{36}$Diacylrest, ein cycloaliphatischer oder aromatischer $C_8$-$C_{14}$Diacylrest oder ein aliphatischer, cycloaliphatischer oder aromatischer $C_8$-$C_{14}$Dicarbamoylrest; und worin

p 1, 2 oder 3 bedeutet,

$R_3$ Wasserstoff, $C_1$-$C_{12}$Alkyl, $C_5$-$C_7$Cycloalkyl, $C_7$-$C_8$Aralkyl, $C_2$-$C_{18}$-Alkanoyl, $C_3$-$C_5$Alkenoyl oder Benzoyl ist; und worin

$R_4$, im Falle von p=1, Wasserstoff, $C_1$-$C_{18}$Alkyl, $C_5$-$C_7$Cycloalkyl oder $C_2$-$C_8$Alkenyl ist, das gegebenenfalls mit Cyan substituiert ist oder eine carbonylhaltige Gruppe oder eine Acylaminogruppe enthält, oder $R_4$ ist Glycidyl, eine Gruppe der Formel $-CH_2-CH(OH)-Z$ oder eine Gruppe der Formel -CONH-Z, worin Z Wasserstoff, Methyl oder Phenyl bedeutet; oder worin

$R_4$, im Falle von p=2, $C_2$-$C_{12}$Alkylen, $C_6$-$C_{12}$Arylen, Xylylen, eine Gruppe $-CH_2CH(OH)CH_2-$ oder eine Gruppe $-CH_2-CH(OH)-CH_2-O-X-O-CH_2-CH(OH)-CH_2-$ ist, wobei X $C_2$-$C_{10}$Alkylen, $C_6$-$C_{15}$Arylen oder $C_6$-$C_{12}$-Cycloalkylen bedeutet, oder $R_4$ ist ein divalenter aliphatischer, cycloaliphatischer oder aromatischer Diacylrest oder Dicarbamoylrest, oder $R_4$ ist eine Ketogruppe, aber nur mit der Massgabe, dass $R_3$ nicht Alkanoyl, Alkenoyl oder Benzoyl bedeutet; oder $R_3$ und $R_4$ bilden im Falle von p=1 einen cyclischen aliphatischen oder aromatischen 1,2- oder 1,3-Diacylrest oder sie bilden zusammen einen divalenten aliphatischen Monoacylrest oder $R_4$ ist ein Rest

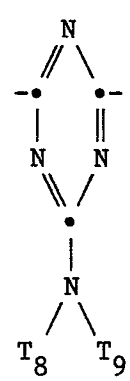

worin $T_8$ und $T_9$ unabhängig voneinander Wasserstoff oder $C_1$-$C_{18}$Alkyl sind, oder worin $T_8$ und $T_9$ zusammen $C_4$-$C_6$Alkylen oder 3-Oxapentamethylen bedeuten, bevorzugt jedoch 3-Oxapentamethylen; und worin

$R_4$, im Falle von p=3, 2,4,6-Triazinyl ist; worin

$R_5$, im Falle von n=1, $C_2$-$C_8$Alkylen oder Hydroxyalkylen oder $C_4$-$C_{22}$-Acyloxyalkylen bedeutet; oder worin

$R_5$, im Falle von n=2, eine Gruppe $(-CH_2)_2C(CH_2-)_2$ bedeutet; und worin

$R_6$ Wasserstoff, $C_1$-$C_{12}$Alkyl, Allyl, Benzyl, Glycidyl oder $C_2$-$C_6$Alkoxyalkyl ist; und worin

$R_7$, im Falle von n=1, Wasserstoff, $C_1$-$C_{12}$Alkyl, $C_3$-$C_5$Alkenyl, $C_7$-$C_9$-Aralkyl, $C_5$-$C_7$Cycloalkyl, $C_2$-$C_4$Hydroxyalkyl, $C_2$-$C_6$Alkoxyalkyl, $C_6$-$C_{10}$Aryl, Glycidyl, eine Gruppe der Formel $-(CH_2)_m$-O-CO-Q oder der Formel $-(CH_2)_m$-COO-Q bedeutet, wobei m 1 oder 2 ist und Q $C_1$-$C_4$Alkyl oder Phenyl bedeutet; oder worin

$R_7$, im Falle von n=2, $C_2$-$C_{12}$Alkylen, $C_6$-$C_{12}$Arylen, eine Gruppe $-CH_2-CH(OH)-CH_2-O-X-O-CH_2-CH(OH)-CH_2-$ bedeutet, wobei X $C_2$-$C_{10}$Alkylen, $C_6$-$C_{15}$Arylen oder $C_6$-$C_{12}$Cycloalkylen oder eine Gruppe $-CH_2-CH(OZ')-CH_2-(OCH_2-CH(OZ')-CH_2)_2-$ ist, worin Z' Wasserstoff, $C_1$-$C_{18}$Alkyl, Allyl, Benzyl, $C_2$-$C_{12}$Alkanoyl oder Benzoyl ist; oder worin

$Q_1$ $-N(R_8)-$ oder -O- ist, E $C_1$-$C_3$Alkylen oder eine Gruppe $-CH_2-CHR_9-O-$ bedeutet, worin $R_9$ Wasserstoff, Methyl oder Phenyl ist oder worin E die Gruppe $-(CH_2)_3-NH-$ oder eine direkte Bindung bedeutet; und worin

$R_{10}$ Wasserstoff oder $C_1$-$C_{18}$Alkyl bedeutet, $R_8$ Wasserstoff, $C_1$-$C_{18}$Alkyl, $C_5$-$C_7$Cycloalkyl, $C_7$-$C_{12}$Aralkyl, Cyanoethyl, $C_6$-$C_{10}$Aryl oder die Gruppe $-CH_2-CH(R_9)-OH$ ist, worin $R_9$ die oben definierte Bedeutung besitzt, oder worin $R_8$ schliesslich eine Gruppe der Formel

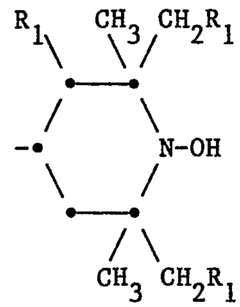

oder der Formel

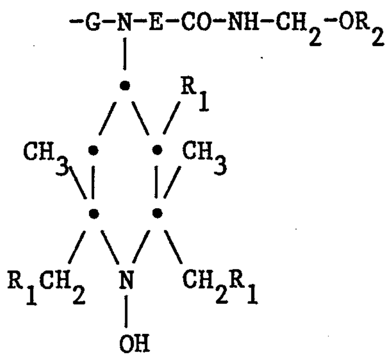

bedeutet, worin G $C_2$-$C_6$Alkylen oder $C_6$-$C_{12}$Arylen ist, oder worin $R_8$ auch eine Gruppe $-E-CO-NH-CH_2-OR_{10}$ ist; worin Formel VII die wiederkehrende Struktureinheit eines Polymers bedeutet, worin $T_3$ Ethylen oder 1,2-Propylen ist, oder $T_3$ ist die wiederkehrende Struktureinheit in einem Copolymeren eines α-olefinischen Restes mit einem Alkylacrylat oder -methacrylat; vorzugsweise ein Copolymeres von Ethylen und Ethylacrylat, bei dem k zwischen 2 und 100 ist;

$T_4$ hat dieselbe Bedeutung wie $R_4$ im Falle von p=1 oder p=2;

$T_5$ ist Methyl;

$T_6$ ist Methyl oder Ethyl, oder $T_5$ und $T_6$ bilden zusammen Tetramethylen oder Pentamethylen oder es liegt eine Mischung besagter Hydroxylaminderivate vor, bevorzugt sind $T_5$ und $T_6$ als Methyl;

M und Y sind unabhängig voneinander Methylen oder Carbonyl, M ist vorzugsweise Methylen und Y Carbonyl;

$T_4$ bedeutet Ethylen im Falle von n=2;

L bedeutet geradkettiges oder verzweigtes $C_4$-$C_7$Alkylen, 3-Oxapentamethylen oder 3- Hydroxyazapentamethylen;

$T_7$ besitzt die gleiche Bedeutung wie $R_7$ und ist im Falle n=2 bevorzugt Octamethylen;

$T_{10}$ und $T_{11}$ sind unabhängig voneinander $C_2$-$C_{12}$Alkylen oder $T_{11}$ ist eine Gruppe der Formel

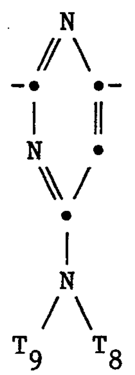

und $T_{12}$ ist eine Gruppe der Formel

$$-NH-(CH_2)_a-\underset{|}{N}-(CH_2)_b-\underset{|}{N}-\left[(CH_2)_c-\underset{|}{N}\right]_d-H$$

worin a, b und c unabhängig voneinander 2 oder 3 sind, und d die Werte 0 oder 1 annimmt, bevorzugt werden a und c mit den Werten 3, b mit dem Wert 2 und d mit dem Wert 1;

e bedeutet 3 oder 4, vorzugsweise 4; und

$T_{13}$ besitzt die gleiche Bedeutung wie $R_2$ mit der Massgabe, dass $T_{13}$ nicht Wasserstoff ist, wenn n=1 ist.

Die vorliegende Erfindung betrifft insbesondere stabilisierte Zusammensetzungen wie oben definiert, worin die Komponente b

(1) ein phenolisches Antioxidans oder eine Mischung phenolischer Antioxidantien ist, oder

(2) ein phenolisches Antioxidans oder eine Mischung phenolischer Antioxidantien in Kombination mit

- (i) einer organischen Phosphorverbindung oder einer Mischung organischer Phosphorverbindungen
- (ii) einem sterisch gehinderten Amin oder einer Mischung sterisch gehinderter Amine
- (iii) einem Thiosynergisten oder einer Mischung von Thiosynergisten
- (iv) einem Ultraviolettabsorber oder einer Mischung von Ultraviolettabsorbern

(v) einem sterisch gehinderten Amin und einer organischen Phosphorverbindung oder einer Mischung dieser Verbindungsklassen

(vi) einem sterisch gehinderten Amin, einem Thiosynergisten und einer organischen Phosphorverbindung oder einer Mischung dieser Verbindungsklassen

(vii) einem Ultraviolettabsorber und einem sterisch gehinderten Amin oder einer Mischung dieser Verbindungsklassen oder

(viii) einem Ultraviolettabsorber und einer organischen Phosphorverbindung oder einer Mischung dieser Verbindungsklassen bedeutet,

(ix) einem Metallsalz einer Fettsäure oder einer Mischung dieser Metallsalze, oder

(3) ein sterisch gehindertes Amin oder eine Mischung sterisch gehinderter Amine, oder

(4) ein Metallsalz einer Fettsäure oder einer Mischung dieser Metallsalze ist.

Hydroxylaminderivate, die sich in den erfindungsgemässen Zusammensetzungen bevorzugt einsetzen lassen, sind durch die Strukturformeln I bis XIV gekennzeichnet. Einige dieser Verbindungen sind bekannt und im Handel erhältlich. In anderen Fällen sind Aminzwischenprodukte, die zur Synthese der Hydroxylamine benötigt werden, im Handel erhältlich.

Hydroxylamine stellt man durch Umsetzung eines Hydroxylamins oder eines substituierten Hydroxylamins mit einer Verbindung enthaltend aktives Halogen in Gegenwart eines Säureakzeptors her; oder man oxidiert ein Amin mit einer Peroxiverbindung, wie beispielsweise Wasserstoffperoxid, und reduziert das entstandene Oxyl-Zwischenprodukt anschliessend zum gewünschten Hydroxylamin; Hydroxylamine lassen sich auch durch Reduktion von Oximen eines zyklischen Ketons erhalten.

Wenn das Hydroxylaminderivat eine Struktur der Formel I besitzt, bedeutet $T_1$ als $C_1$-$C_{36}$Alkyl beispielsweise Methyl, Ethyl, Propyl, Isobutyl, Butyl, tert.Butyl, n-Hexyl, n-Octyl, n-Dodecyl, n-Octadecyl, Eicosyl oder Triacontyl.Bevorzugt wird $T_1$ als $C_4$-$C_{18}$Alkyl.

$T_1$ kann auch $C_5$-$C_{12}$Cycloalkyl bedeuten, wie beispielsweise Cyclopentyl, Cyclohexyl, Cyclooctyl oder Cyclododecyl. Bevorzugt wird $T_1$ als Cyclohexyl oder Cyclododecyl.

$T_1$ als $C_7$-$C_9$Aralkyl bedeutet beispielsweise Benzyl, α-Methylbenzyl oder α,α-Dimethylbenzyl, wobei die Benzylgruppe zusätzlich alkylsubstituiert sein kann, bevorzugt durch Methyl, oder wobei die Benzylgruppe durch ein oder zwei Halogenatome, bevorzugt durch Chlor oder Brom, substituiert sein kann.

Bevorzugt wird $T_1$ als Benzyl.

Der Index g in Formel I ist vorzugsweise 1 oder 2, insbesondere aber 1.

$T_1$ und $T_2$ besitzen zusammen vorzugsweise zwischen 6 und 36 C-Atome. Besonders bevorzugt werden $T_2$ als Wasserstoff und $T_1$ als $C_6$-$C_{12}$-Cycloalkyl, oder $T_1$ und $T_2$ sind unabhängig voneinander $C_4$-$C_{18}$Alkyl, Cyclohexyl oder Benzyl.

Besonders bevorzugte Verbindungen der Formel I sind N,N-Di-tert.-butylhydroxylamin, N,N-Di-n-octylhydroxylamin, N-Cyclohexylhydroxylamin, N-Cyclododecylhydroxylamin, N,N-Dicyclohexylhydroxylamin und N,N-Dibenzylhydroxylamin oder Mischungen dieser Verbindungen.

Im Falle von g=2 bedeutet $T_2$ als $C_2$-$C_{12}$Alkylen beispielsweise Ethylen, 1,2-Propylen, Trimethylen, Tetramethylen, Hexamethylen, Octamethylen oder Dodecamethylen. Bevorzugt wird $T_2$ als $C_2$-$C_8$Alkylen.

Im Falle von g=2 bedeutet $T_2$ auch $C_6$-$C_{10}$Cycloalkylen und ist dann beispielsweise Cyclohexylen, bevorzugt 1,4-Cyclohexylen oder Decahydronaphthylen.

Als $C_8$-$C_{10}$Alkylenarylenalkylen bedeutet $T_2$ beispielsweise p-Xylylen oder Ethylen-p-phenylen-ethylen. Bevorzugt wird $T_2$ als p-Xylylen oder als ein Rest der Formel

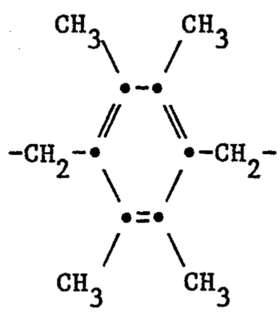

Als $C_6$-$C_{10}$Arylen bedeutet $T_2$ o-, m- oder p-Phenylen, bevorzugt m- oder p-Phenylen oder 1,4-Naphthylen.

Im Falle von g=3 bedeutet $T_2$ $C_3$-$C_6$Alkantriyl und ist dann beispielsweise Glyceryl, 1,2,3-Propantriyl oder bevorzugt ein Rest der Formel

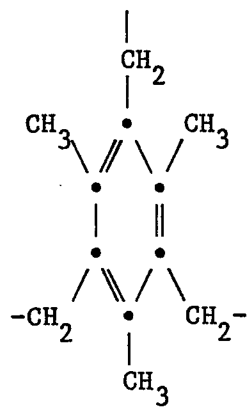

Im Falle von g=4 bedeutet $T_2$ $C_4$-$C_6$Alkantetrayl und ist dann beispielsweise 1,2,3,4-Butantetrayl oder $(-CH_2)_2C(CH_2-)_2$.

Wenn das Hydroxylamin eine Struktur der Formeln II bis VII besitzt, bedeutet $R_1$ Wasserstoff oder Methyl, bevorzugt Wasserstoff.

Bedeuten irgendwelche Substituenten $C_1$-$C_{12}$Alkyl, so handelt es sich beispielsweise um Methyl, Ethyl, n-Propyl, sek.-Propyl, n-Butyl, sek.Butyl, tert.Butyl, n-Hexyl, n-Octyl, 2-Ethylhexyl, n-Nonyl, n-Decyl, n-Undecyl oder n-Dodecyl.

$R_2$ bedeutet als $C_1$-$C_{18}$Alkyl zusätzlich zu den obenerwähnten Gruppen n-Tridecyl, n-Tetradecyl, n-Hexadecyl oder n-Octadecyl.

Als gegebenenfalls durch ein oder mehrere Sauerstoffatome unterbrochenes Alkyl bedeutet $R_2$ beispielsweise 3-Oxabutyl, 3,6-Dioxaheptyl, 3,6,9-Trioxadecyl, 3,6,9,12-Tetraoxatridecyl oder 3,6,9,12,15-Pentaoxahexadecyl.

Wenn $R_2$ ein monovalenter Acylrest ist, so leitet sich dieser beispielsweise von Essigsäure, Stearinsäure, Salicylsäure, Methacrylsäure, Benzoesäure oder ß-(3,5-Di-tert.butyl-4-hydroxyphenyl)-propionsäure ab.

$R_2$ bedeutet als monovalenter Acylrest einer Carbamidsäure beispielsweise Carbamoyl oder 2-Carbamoyl-propionoyl.

Als mono- oder divalenter Rest einer phosphorhaltigen Säure leitet sich $R_2$ beispielsweise von der phosphorigen Säure, der Phosphonsäure, der Phosphinsäure oder der Phosphorsäure bzw. von den Estern oder Halbestern dieser Säuren ab.

Als $C_1$-$C_{12}$-Alkylen bedeutet $R_2$ beispielsweise Methylen, Ethylen, Propylen, 2,2-Dimethylpropylen, Tetramethylen, Hexamethylen, Octamethylen, Octamethylen, Decamethylen oder Dodecamethylen.

Als $C_4$-$C_{12}$-Alkenylen bedeutet $R_2$ beispielsweise 1,4-But-2-enylen, 1,6-Hex-3-enylen, 1,8-Oct-4-enylen, 1,10-Dec-5-enylen oder 1,12-Dodec-6-enylen; vorzugsweise jedoch 1,4-But-2-enylen.

Wenn $R_2$ ein divalenter Acylrest ist, so leitet sich dieser beispielsweise von Adipinsäure, Suberinsäure, Sebacinsäure, Maleinsäure, Phthalsäure, Dibutylmalonsäure, Dibenzylmalonsäure, Butyl-(3,5-di-tert-butyl-4-hydroxybenzyl)-malonsäure oder Bicycloheptendicarbonsäure ab.

Wenn $R_2$ ein bivalenter Carbamoylrest ist, so leitet sich dieser beispielsweise von Hexamethylendicarbaminsäure oder von 2,4-Toluylendicarbaminsäure ab.

Folgende Polyalkylpiperidinverbindungen lassen sich besonders bevorzugt als Ausgangsmaterialien zur Herstellung von Hydroxylaminen der Formel II einsetzen:
4-Hydroxy-2,2,6,6-tetramethylpiperidin
4-Stearoyloxy-2,2,6,6-tetramethylpiperidin
Di-(2,2,6,6-tetramethylpiperidin-4-yl)adipat
Di-(2,2,6,6-tetramethylpiperidin-4-yl)sebacat
Dimethyl-bis-(2,2,6,6-tetramethylpiperidin-4-oxy)-silan.

Bedeuten irgendwelche Substituenten $C_5$-$C_7$Cycloalkyl, so handelt es sich beispielsweise um Cyclopentyl, Cyclohexyl oder Cycloheptyl, bevorzugt um Cyclohexyl.
Als $C_7$-$C_8$Aralkyl bedeutet $R_3$ insbesondere Phenylethyl oder Benzyl.

Als $C_2$-$C_{18}$Alkanoyl ist $R_3$ beispielsweise Propionyl, Butyryl, Octanoyl, Dodecanoyl, Hexadecanoyl, Octadecanoyl, insbesondere jedoch Acetyl; und als $C_3$-$C_5$Alkenoyl bedeutet $R_3$ bevorzugt Acryloyl.

Als $C_2$-$C_8$Alkenyl, das gegebenenfalls durch eine Cyan-, eine carbonylhaltige Gruppe oder eine Acylaminogruppe substituiert ist, bedeutet $R_4$ beispielsweise 1-Propenyl, Allyl, Methallyl, 2-Butenyl, 2-Pentenyl, 2-Hexenyl, 2-Octenyl, 2,2-Dicyanovinyl, 1-Methyl-2-cyano-2-methoxycarbonylvinyl oder 2,2-Diacetylaminovinyl.

Bedeuten irgendwelche Substituenten $C_2$-$C_{12}$Alkylen, so handelt es sich beispielsweise um Ethylen, Propylen, 2,2-Dimethylpropylen, Tetramethylen, Hexamethylen, Octamethylen, Decamethylen oder Dodecamethylen.

Bedeuten irgendwelche Substituenten $C_6$-$C_{12}$Arylen, so handelt es sich beispielsweise um o-, m- oder p-Phenylen, 1,4-Naphthylen oder um 4,4-Diphenylen.

X als $C_6$-$C_{15}$Arylen kann zusätzlich noch 4,4'-(2,2-Propylidendiphenylen) bedeuten.

Als $C_6$-$C_{12}$Cycloalkylen ist X vorzugsweise Cyclohexylen.

Als divalenter aliphatischer, cycloaliphatioscher oder aromatischer Diacylrest leitet sich $R_4$ beispielsweise von Adipinsäure, Suberinsäure, Sebacinsäure, Maleinsäure, Phthalsäure, Dibutylmalonsäure, Dibenzylmalonsäure, Butyl-(3,5-di-tert.butyl-4-hydroxybenzyl)-malonsäure oder Cyclohexandicarbonsäure ab.

Als Dicarbamoylrest ist $R_4$ beispielsweise ein Rest der Hexamethylendicarbaminsäure oder der 2,4-Toluylendicarbaminsäure.

Wenn $R_3$ und $R_4$ im Falle von p=1 einen cyclischen aliphatischen oder aromatischen 1,2- oder 1,3-Diacylrest bilden, so leitet sich dieser Rest von m-Phthalsäure, o-Phthalsäure, Cyclohexan-1,2-dicarbonsäure oder von Cyclohexan-1,3-dicarbonsäure ab.

Als divalenter aliphatischer Monoacylrest bilden $R_3$ und $R_4$ zusammen mit dem gemeinsamen Stickstoffatom ein Lactam, bevorzugt ε-Caprolactam.

Die folgenden Polyalkylpiperidine eignen sich besonders als Ausgangsmaterialien zur Herstellung von Hydroxylaminderivaten der Formel III:

N,N-Bis-(2,2,6,6-tetramethylpiperidin-4-yl)-hexamethylen-1,6-diamin
N,N-Bis-(2,2,6,6-tetramethylpiperidin-4-yl)-hexamethylen-1,6-diacetamid
4-Benzylamino-2,2,6,6-tetramethylpiperidin
N,N'-Bis-(2,2,6,6-tetramethylpiperidin-4-yl)-N,N'-dibutyladipinamid
N,N'-Bis-(2,2,6,6-tetramethylpiperidin-4-yl)-p-xylylendiamin
N,N'-Bis-(2,2,6,6-tetramethylpiperidin-4-yl)-N,N'-dicyclohexyl-(2-hydroxypropylen)-diamin
4-(3-Methyl-4-hydroxy-5-tert.butylbenzoeacetamido)-2,2,6,6-tetramethylpiperidin
α-Cyano-ß-methyl-ß-[N-(2,2,6,6-tetramethylpiperidin-4-yl)-amino-acrylsäuremethylester.

Bedeutet $R_5$ $C_2$-$C_8$Alkylen oder Hydroxyalkylen, so handelt es sich beispielsweise um Ethylen, 1-Methylethylen, Propylen, 2-Ethylpropylen oder um 2-Ethyl-2-hydroxymethylpropylen.

Als $C_4$-$C_{22}$Acyloxyalkylen bedeutet $R_5$ beispielsweise 2-Ethyl-2-acetoxymethylpropylen.

Die folgenden Polyalkylpiperidine eignen sich besonders als Ausgangsmaterialien zur Herstellung von Hydroxylaminderivaten der Formel IV:
9-Aza-8,8,10,10-tetramethyl-1,5-dioxaspiro[5.5]undecan
9-Aza-8,8,10,10-tetramethyl-3-ethyl-1,5-dioxaspiro[5.5]undecan
2,2,6,6-Tetramethylpiperidin-4-spiro-2'-(1',3'-dioxan)-5'-spiro-5"-(1",3"-dioxan)-2"-spiro-4-"'-(2"',2"'.6"',6"'-tetramethylpiperidin).

Bedeuten irgendwelche Substituenten $C_2$-$C_6$Alkoxyalkyl, so handelt es sich beispielsweise um Methoxymethyl, Ethoxymethyl, Propoxymethyl, tert.Butoxymethyl, Ethoxyethyl, Ethoxypropyl, n-Butoxyethyl, tert.Butoxyethyl, Isopropoxyethyl oder Propoxypropyl.

$R_7$ als $C_3$-$C_5$Alkenyl bedeutet beispielsweise 1-Propenyl, Allyl, Methallyl, 2-Butenyl oder 2-Pentenyl.

Als $C_7$-$C_9$Aralkyl ist $R_7$ insbesondere Phenylethyl oder besonders bevorzugt Benzyl; und als $C_5$-$C_7$Cycloalkyl bedeutet $R_7$ insbesondere Cyclohexyl.

Ist $R_7$ $C_2$-$C_4$Hydroxyalkyl, so handelt es sich beispielsweise um 2-Hydroxyethyl, 2-Hydroxypropyl, 3-Hydroxypropyl, 2-Hydroxybutyl oder um 4-Hydroxybutyl.

Als $C_6$-$C_{10}$Aryl bedeutet $R_7$ insbesondere Phenyl, α- oder ß-Naphthyl, welches unsubstituiert oder durch Halogen oder $C_1$-$C_4$Alkyl substituiert ist.

Als $C_2$-$C_{12}$Alkylen ist $R_7$ beispielsweise Ethylen, Propylen, 2,2-Dimethylpropylen, Tetramethylen, Hexamethylen, Octamethylen, Decamethylen oder Dodecamethylen.

Bedeutet $R_7$ $C_6$-$C_{12}$Arylen, so handelt es sich beispielsweise um o-, m- oder p-Phenylen, 1,4-Naphthylen oder 4,4'-Diphenylen.

Bedeutet Z' $C_2$-$C_{12}$Alkanoyl, so handelt es sich beispielsweise um Propionyl, Butyryl, Octanoyl, Dodecanoyl oder besonders bevorzugt um Acetyl.

Die folgenden Polyalkylpiperidine eignen sich bevorzugt als Ausgangsmaterialien zur Herstellung von Hydroxylaminderivaten der Formel V:
3-Benzyl-1,3,8-triaza-7,7,9,9-tetramethylspiro[4.5]-decan-2,4-dion
3-n-Octyl-1,3,8-triaza-7,7,9,9-tetramethylspiro[4.5]-decan-2,4-dion
3-Allyl-1,3,8-triaza-1,7,7,9,9-pentamethylspiro[4.5]-decan-2,4-dion
oder die Verbindungen der folgenden Strukturformeln:

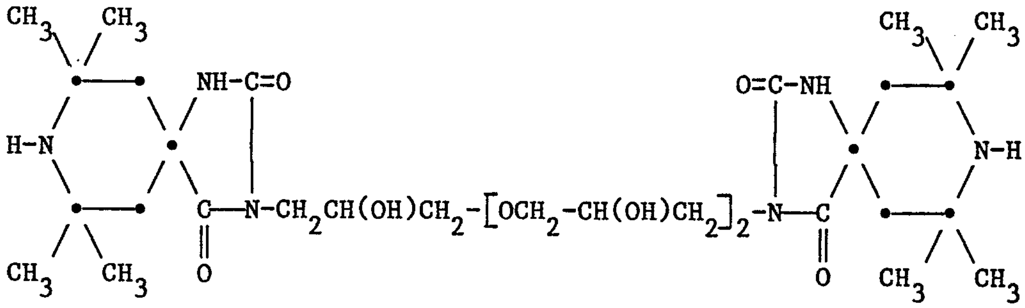

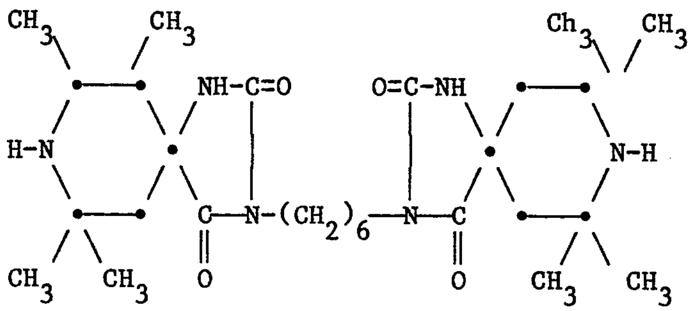

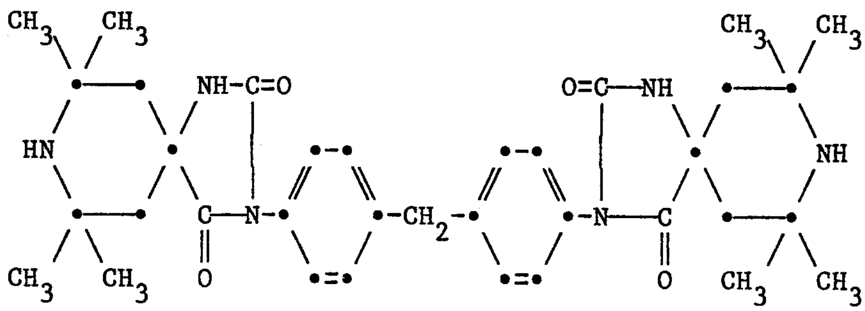

$R_8$ bedeutet als $C_5$-$C_7$Cycloalkyl insbesondere Cyclohexyl.

Als $C_6$-$C_{10}$Aryl bedeutet $R_8$ insbesondere Phenyl, α- oder ß-Naphthyl, das gegebenenfalls mit Halogen oder $C_1$-$C_4$Alkyl substituiert ist.

E bedeutet als $C_1$-$C_3$Alkylen beispielsweise Methylen, Ethylen oder Propylen.

Als $C_2$-$C_6$Alkylen bedeutet G beispielsweise Ethylen, Propylen, 2,2-Dimethylpropylen, Tetramethylen oder Hexamethylen; und als $C_6$-$C_{12}$Arylen ist G beispielsweise o-, m- oder p-Phenylen, 1,4-Naphthylen oder 4,4'-Diphenylen.

Die folgenden Polyalkylpiperidine eignen sich vorzugsweise zur Herstellung der Hydroxylderivate der Formel VI:

N-Hydroxymethyl-N'-(2,2,6,6-tetramethylpiperidin-4-yl)-harnstoff

N-Methoxymethyl-N'-(2,2,6,6-tetramethylpiperidin-4-yl)-harnstoff

N-Methoxymethyl-N'-n-dodecyl-N'-(2,2,6,6-tetramethylpiperidin-4-yl)-harnstoff

O-(2,2,6,6-Tetramethylpiperidin-4-yl)-N-methoxymethylurethan.

Die folgenden polymeren Verbindungen eignen sich bevorzugt als Ausgangsmaterialien zur Herstellung der Hydroxylaminderivate der Formel VII:

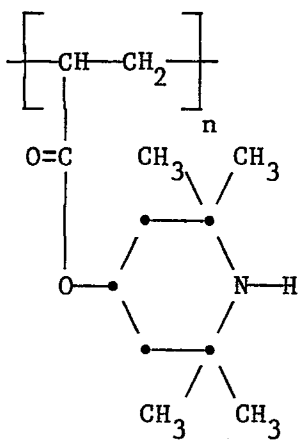

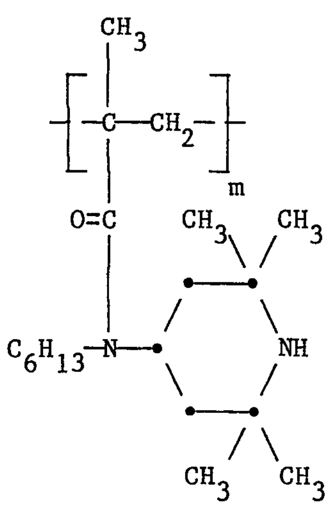

In Hydroxylaminderivaten der Formel IX bedeutet L beispielsweise Tetramethylen, Pentamethylen, Hexamethylen, Heptamethylen, 2,6-Heptandiyl, 2,4-Dimethyl-1,5-pentandiyl, 3-Oxapentamethylen oder 3-Hydroxyazapentamethylen. Besonders bevorzugt wird L als Pentamethylen oder als 3-Oxapentamethylen.

Besonders bevorzugt werden Hydroxylaminderivate der Formel I.

Als gesättigte Polyolefine, die in den erfindungsgemässen Zusammensetzungen zur Anwendung gelangen, sind besonders solche bevorzugt, die sich von Monoolefinen, insbesondere von α-Olefinen, ableiten, wie beispielsweise Polyethylen, das gegebenenfalls vernetzt sein kann, Polypropylen, Polyisobutylen, Polybuten-1, Poly-3-methylbuten-1 oder Polymethylpenten-1.

Als Polyethylen kann solches niedriger, mittlerer oder hoher Dichte verwendet werden. Auch Mischungen der obenerwähnten Polymeren lassen sich einsetzen, wie beispielsweise Mischungen von Polyethylen und Polypropylen, von Polypropylen und Polybuten-1 sowie von Polyisopropylen und Polypropylen oder weitere Kombinationen.

Auch Copolymerisate der obenerwähnten Monoolefine, insbesondere der α-Olefine, lassen sich in den erfindungsgemässen Zusammensetzungen verwenden. So lassen sich beispielsweise Ethylen/Propylen-Copolymere, Propylen/Buten-1-Copolymere, Propylen/Octen-1-Copolymere, Ethylen/Buten-1-Copolymere, Ethylen/Octan-1-Copolymere sowie Ethylen/Vinylacetat-Copolymere einsetzen.

Besonders bevorzugt werden Zusammensetzungen, die als polyolefinische Komponente Polyethylen, Polypropylen, Polyisobutylen, Poly-(buten-1-), Poly-(penten-1), Poly-(3-methylbuten-1), Poly-(4-methylpenten-1) oder unterschiedliche Ethylen- oder Propylencopolymere enthalten.

Ganz besonders bevorzugt werden Zusammensetzungen, deren Polyolefinsubstrate Polypropylen, Polyethylen niedriger, mittlerer oder hoher Dichte, lineares Polyethylen niedriger Dichte, Poly-(buten-1), Ethylen/Vinylacetat Copolymeres, Ethylen/Propylen Copolymeres oder Copolymere von Ethylen oder von Propylen mit anderen α-Olefinen sind.

Insbesondere werden Polypropylen, Hochdruckpolyethylen, Ethylen/Propylen Copolymer oder Copolymere von Ethylen oder Propylen mit anderen α-Olefinen als polyolefinische Substrate bevorzugt.

Phenolische Antioxidantien, die in den erfindungsgemässen Zusammensetzungen angewendet werden können, stammen aus unterschiedlichen Stoffklassen. Einige Beispiele sind in der nachfolgenden Liste aufgeführt:

Einfache 2,6-Dialkylphenole wie beispielsweise 2,6-Di-tert.-butyl-4-methylphenol, 2-tert.-Butyl-4,6-dimethylphenol, 2,6-Di-tert.-butyl-4-methoxymethylphenol, 2,6-Dioctadecyl-4-methylphenol und 2,6-Di-tert.-butylphenol.

Derivate alkylierter Hydrochinone wie beispielsweise 2,5-Di-tert.-butyl-hydrochinon, 2,5-Di-tert.-amyl-hydrochinon, 2,6-Di-tert.-butyl-hydrochinon, 2,5-Di-tert.-butyl-4-hydroxy-anisol, 3,5-Di-tert.-butyl-4-hydroxy-anisol, Tris-(3,5-di-tert.-butyl-4-hydroxyphenyl)-phosphit, 3,5-Di-tert.-butyl-4-hydroxyphenyl-stearat und Bis-(3,5-di-tert.-butyl-4-hydroxyphenyl)-adipat.

Hydroxylierte Thiodiphenylether wie beispielsweise 2,2'-Thio-bis-(6-tert.-butyl-4-methylphenol), 2,2'-Thio-bis-(4-octylphenol), 4,4'-Thio-bis-(6-tert.-butyl-3-methylphenol), 4,4'-Thio-bis-(3,6-di-sec.-amylphenol), 4,4'-Thio-bis-(6-tert.-butyl-2-methylphenol) und 4,4'-Bis-(2,6-dimethyl-4-hydroxyphenyl)-disulfid.

Alkyliden-bisphenole wie beispielsweise 2,2'-Methylen-bis-(6-tert.-butyl-4-methylphenol), 2,2'-Methylen-bis-(6-tert.-butyl-4-ethyl phenol), 4,4'-Methylen-bis-(6-tert.-butyl-2-methylphenol), 4,4-Methylen-bis-(2,6-di-tert.-butylphenol), 2,6-Di(3-tert.-butyl-5-methyl-2-hydroxybenzyl)-4-methylphenol, 2,2'-Methylen-bis-[4-methyl-6-(α-methylcyclohexyl)-phenol], 1,1-Bis(3,5-dimethyl-2-hydroxyphenyl)-butan, 1,1-Bis-(5-tert.-butyl-4-hydroxy-2-methylphenyl)-butan, 2,2-Bis-(3,5-di-tert.-butyl-4-hydroxyphenyl)-propan, 1,1,3-Tris-(5-tert.-butyl-4-hydroxy-2-methylphenyl)-butan, 2,2-Bis-(5-tert.-butyl-4-hydroxy-2-methylphenyl)-4-n-dodecylmercapto butan, 1,1,5,5-Tetra-(5-tert.-butyl-4-hydroxy-2-methylphenyl)-pentan und Ethylenglycol-bis-[3,3-bis-(3-tert.-butyl-4-hydroxyphenyl)-butyrat].

O-, N- und S-Benzyl-Verbindungen wie beispielsweise 3,5,3',5'-Tetra-tert.-butyl-4,4'-dihydroxydibenzylether, Octadecyl-4-hydroxy-3,5-dimethylbenzyl-mercaptoacetat, Tris-(3,5-di-tert.-butyl-4-hydroxybenzyl)-amin und Bis-(4-tert.-butyl-3-hydroxy-2,6-dimethylbenzyl)-dithioterephthalat.

Hydroxybenzylierte Malonate wie beispielsweise Di-octadecyl-2,2-bis-(3,5-di-tert.-butyl-2-hydroxybenzyl)-malonat, Di-octadecyl-2-(3-tert.-butyl-4-hydroxy-5-methylbenzyl)-malonat, Di-dodecylmercapto-ethyl-2,2-bis-(3,5-di-tert.-butyl-4-hydroxybenzyl )-malonat und Di-[4-(1,1,3,3-tetramethylbutyl)-phenyl]-2,2-bis-(3,5-di-tert.-butyl -4-hydroxybenzyl)-malonat.

Aromatisch substituierte Hydroxybenzylverbindunen wie beispielsweise 1,3,5-Tri-(3,5-di-tert.-butyl-4-hydroxybenzyl)-2,4,6-trimethyl-benzol, 1,4-Di-(3,5-di-tert.-butyl-4-hydroxybenzyl)-2,3,5,6-tetramethylbenzol und 2,4,6-Tri-(3,5-di-tert.-butyl-4-hydroxybenzyl)-phenol.

s-Triazin-Verbindungen wie beispielsweise 2,4-Bis-octylmercapto-6-(3,5-di-tert.-butyl-4-hydroxy-anilino)-s-triazin, 2-Octylmer capto-4,6-bis-(3,5-di-tert.-butyl-4-hydroxyanilino)-s-triazin, 2-Octylmercapto-4,6-bis-(3,5-di-tert.-butyl-4-hydroxyphenoxy)-s-triazin, 2,4,6-Tris-(3,5-di-tert.-butyl-4-hydroxyphenoxy)-s-triazin, 2,4,6-Tris-(3,5-di-tert.-butyl-4-hydroxyphenylethyl)-s-triazin, 1,3,5-Tris-(2,6-dimethyl-3-hydroxy-4-tert.-butylbenzyl)-isocyanurat und 1,3,5-Tris-(3,5-di-tert.-butyl-4-hydroxybenzyl)-isocyanurat.

Amide der ß-(3,5-Di-tert.-butyl-4-hydroxyphenyl)-propionsäure wie beispielsweise 1,3,5-Tris-(3,5-di-tert.-butyl-4-hydroxyphenyl-propionyl)-hexahydro-s-triazin und N,N'-Di-(3,5-di-tert.-butyl-4-hydroxyphenyl-propionyl)-hexamethylendiamin oder N,N'-Bis-ß-(3,5-di-t-butyl-4-hydroxyphenyl)-propionylhydrazin.

Ester der ß-(3,5-Di-tert.-butyl-4-hydroxyphenyl)-propionsäure mit ein- oder mehrwertigen Alkoholen wie beispielsweise mit Methanol, Ethanol, Octadecanol, 1,6-Hexandiol, 1,9-Nonandiol, Ethylenglykol, 1,2-Propandiol, Diethylenglykol, Thiodiethylenglykol, Triethylenglykol, Neopentylglykol, Pentaerythrititol, 3-Thia-undecanol, 3-Thia-pentadecanol, Trimethylhexandiol, Trimethylolethan, Trimethylolpropan, Tris-hydroxyethyl-isocyanurat und 4-Hydroxymethyl-1-phospha-2,6,7-trioxabicyclo-[2.2.2]-octan.

Ester der ß-(5-tert.-Butyl-4-hydroxy-3-methylphenyl)-propionsäure mit ein- oder mehrwerteigen Alkoholen wie beispielsweise mit Methanol, Ethanol, Octadecanol, 1,6-Hexandiol, 1,9-Nonandiol, Ehylenglykol, 1,2-Propandiol, Diethylenglykol, Triethylenglykol, Thiodiethylenglykol, Neopentylglykol, Pentaerythritol, 3-Thia-undecanol, 3-Thia-pentadecanol, Trimethylhexandiol, Trimethylolethan, Trimethylolpropan, Tris-hydroxyethylisocyanurat und 4-Hydroxymethyl-1-phospha-2,6,7-trioxabicyclo[2.2.2]-octan.

Ester der 3,5-di-tert.-butyl-4-hydroxyphenylessigsäure mit ein-oder mehrwertigen Alkoholen wie beispielsweise mit Methanol, Ethanol, Octadecanol, 1,6-Hexandiol, 1,9-Nonandiol, Ethylenglykol, 1,2-Propandiol, Diethylenglykol, Thio-diethylenglykol, Neopentylglykol, Pentaerythrithritol, 3-Thia-undecanol, 3-Thia-pentadecanol, Trimethylhexandiol, Trimethylolethan, Trimethylolpropan, Tris-hydroxyethylisocyanurat und 4-Hydroxymethyl-1-phospha-2,6,7-trioxabicyclo-[2.2.2]-octan, besonders bevorzugt mit dem Tetrakisester des Pentaerythrithritols.

Benzylphosphonate wie beispielsweise Dimethyl-3,5-di-tert.-butyl-4-hydroxybenzylphosphonat, Diethyl-3,5-di-tert.-butyl-4-hydroxybenzylphosphonat, Dioctadecyl-3,5-di-tert.-butyl-4-hydroxybenzylphosphonat und Dioctadecyl-5-tert.-butyl-4-hydroxy-3-methylbenzylphosphonat.

Bevorzugte Phenolische Antioxidantien sind n-Octadecyl-3,5-di-tert-butyl-4-hydroxyhydrocinnamat, Neopentantetrayl-tetrakis-(3,5-di-tert.-butyl-4-hydroxyhydrocinnamat), Di-n-octadecyl-3,5-di-tert-butyl-4-hydroxybenzylphosphonat, 1,3,5-Tris-(3,5-di-tert.-butyl-4-hydroxybenzyl)-isocyanurat, Thiodiethylen-bis-(3,5-di-tert.-butyl-4-hydroxyhydrocinnamat, 1,3,5-Trimethyl-2,4,6-tris-(3,5-di-tert.-butyl-4-hydroxybenzyl)-benzol, 3,6-Dioxaoctamethylen-bis-(3-methyl-5-tert.-butyl-4-hydroxyhydrocinnamat), 2,6-Di-tert.-butyl-p-Kresol, 2,2'-Ethyliden-bis-(4,6-di-tert.-butylphenol), 1,3,5-(2,6-dimethyl-4-tert.-butyl-3-hydroxybenzyl)-isocyanurat, 1,1,3-Tris-(2-methyl-4-hydroxy-5-tert.-butylphenyl)-butan, 1,3,5-Tris-[2-(3,5-di-tert.-butyl-4-hydroxyhydrocinnamoyloxy)-ethyl]-isocyanurat, 3,5-Di-(3,5-di-tert.-butyl-4-hydroxybenzyl)-mesitol, Hexametylen-bis-(3,5-di-tert.-butyl-4-hydroxyhydrocinnamat), 1-(3,5-Di-tert.-butyl-4-hydroxyanilino)-3,5-di-(octylthio)-s-triazin, N,N'-Hexamethylen-bis-(3,5-di-tert.-butyl-4-hydroxyhydrocinnamamid), Calcium-bis-(ethyl-3,5-di-tert.-butyl-4-hydroxybenzylphosphonat), Ethylen-bis-[3,3-di-(3-tert.-butyl-4-hydroxyphenyl)-butyrat], Octyl-3,5-di-tert.-butyl-4-hydroxybenzylmercaptoacetat, Bis-(3,5-di-tert.-butyl-4-hydroxyhydrocinnamoyl)-hydrazid und N,N'-Bis-[2-(3,5-di-tert.-butyl-4-hydroxyhydrocinnamoyloxy)-ethyl]-oxamid.

In einer besonders bevorzugten Ausführungsform enthalten die erfindungsgemässen Zusammensetzungen als phenolisches Antioxidans Neopentantetrayl-tetrakis-(3,5-di-tert.-butyl-4-hydroxyhydrocinnamat), n-Octadecyl-3,5-di-tert.-butyl-4-hydroxyhydrocinnamat. 1,3,5-Trimethyl-2,4,6-tris-(3,5-di-tert.-butyl-4-hydroxybenzyl)-benzol, 1,3,5-Tris-(3,5-di-tert.-butyl-4-hydroxybenzyl)-isocyanurat, 2,6-Di-tert.-butyl-p-kresol oder 2,2'-Ethyliden-bis-(4,6-di-tert.-butylphenol).

Enthalten die erfindungsgemässen Zusammensetzungen organische Phosphorverbindungen, so handelt es sich bei diesen Substanzen beispielsweise um Triphenylphosphit, Diphenylalkyl-phosphite, Phenyldialkyl-phosphite, Tri-(nonylphenyl)-phosphit, Tri-laurylphosphit, Tri-octadecyl-phosphit, Di-(isodecyloxy)-2,4,8,10-tetraoxa-3,9-diphospha-[5.5]-undecan und Tri-(4-hydroxy-3,5-di-tert.-butylphenyl)-phosphit oder um analoge Phosphonite.

Als organische Phosphorverbindungen bevorzugt werden Tris-(2,4-di-tert.-butylphenyl)-phosphit, 3,9-Di-(2,4-di-tert.-butylphenoxy)-2,4,8,10-tetraoxa-3,9-diphospha-[5.5]undecan, Tris-(p-nonylphenyl)-phosphit, 3,9-Distearyloxy-2,4,8,10-tetraoxa-3,9-diphospha[5.5]-undecan, Dilauryl-phosphit, 3,9-Di-[2,6-di-tert.-butyl-4-(2-(n-octadecyloxycarbonyl)-ethyl)-phenoxy]-2,4,8,10-tetraoxa-3,9-di-phospha[5.5]undecan und Tetrakis-(2,4-di-tert.-butylphenyl)-4,4'-bis-(diphenylen)-phosphonit. Besonders bevorzugt wird Tris-(2,4-di-tert.-butylphenyl)-phosphit.

Enthalten die erfindungsgemässen Zusammensetzungen Thiosynergisten, so handelt es sich bei diesen Verbindungen beispielsweise um Dilauryl-thiodipropionat, Distearyl-thiodipropionat oder um Neopentantetrayl-tetrakis-(3-dodecylthiopropionat). Distearyl-thiodipropionat oder Dilauryl-thiodipropionat wird bevorzugt.

Enthalten die erfindungsgemässen Zusammensetzungen ein Metallsalz einer Fettsäure, so handelt es sich dabei um Alkalimetall-, Erdalkalimetall-, Zink-, Cadmium- oder Aluminiumsalz der höheren Fettsäuren, wie beispielsweise um Calziumstearat, Zinkstearat, Magnesiumbehenat, Natriumricinoleat oder Kaliumpalmitat. Besonders bevorzugt wird Calziumstearat.

Enthalten die erfindungsgemässen Zusammensetzungen sterisch gehinderte Amine, so handelt es sich bei diesen Verbindungen beispielsweise um 4-Benzoyl-2,2,6,6-tetramethylpiperidin, 4-Stearoyloxy-2,2,6,6-tetramethylpiperidin, Bis-(2,2,6,6-tetramethylpiperidyl)-sebacat oder um 3-n-Octyl-7,7,9,9-tetramethyl-1,3-8-triaza-spiro[4.5]decan-2,4-dion.

Bevorzugte sterisch gehinderte Amine sind Bis-(2,2,6,6-tetramethylpiperidin-4-yl)-sebacat, Bis-(1,2,2,6,6-pentamethylpiperidin-4-yl)-sebacat, Di-(1,2,2,6,6-pentamethylpiperidin-4-yl)-(3,5-di-tert.-butyl-4-hydroxybenzyl)-butylmalonat, Tris-(2,2,6,6-tetramethylpiperidin-4-yl)-nitrilotriacetat, 1,2-Bis-(2,2,6,6-tetramethyl-3-oxopiperazin-4-yl)-ethan, 2,2,4,4-Tetramethyl-7-oxa-3,20-diaza-21-oxo-dispiro[5.1.11.2]-heneicosan, das Polykondensationsprodukt von 2,4-Dichloro-6-tert.-octylamino-s-triazin und 4,4'-Hexamethylen-bis-(amino-2,2,6,6-tetramethylpiperidin), das Polykondensationsprodukt von 1-(2-Hydroxyethyl)-2,2,6,6-tetramethyl-4-hydroxypiperidin und Bernsteinsäure, das Polykondensationsprodukt von 4,4'-Hexamethylen-bis-(2,2,6,6-tetramethylpiperidin) und 1,2-Dibromethan, das Polykondensationsprodukt von 2,4-Dichloro-6-morpholino-s-triazin und 4,4'-Hexamethylen-bis-amino-(2,2,6,6-tetramethylpiperidin),

N,N',N",N"'-Tetrakis-[(4,6-bis-(butyl-(2,2,6,6-tetramethylpiperidin-4-yl)-amino-s-triazin-2-yl]-1,10-diamino-4,7-diazadecan, Octamethylen-bis-(2,2,6,6-tetramethylpiperidin-4-carboxylat) und 4,4'-Ethylen-bis-(2,2,6,6-tetramethylpiperazin-3-on).

Besonders bevorzugte sterisch gehinderte Amine sind Bis-(2,2,6,6-tetramethylpiperidin-4-yl)-sebacat, das Polykondensationsprodukt von 1-(2-Hydroxyethyl)-2,2,6,6-tetramethyl-4-hydroxypiperidin und Bernsteinsäure, das Polykondensationsprodukt von 2,4-Dichloro-6-tert.-octylamino-s-triazin und 4,4'-Hexamethylen-bis-(amino-2,2,6,6-tetramethylpiperidin) oder N,N',N",N"'-Tetrakis[(4,6-bis-(butyl-(2,2,6,6-tetramethyl-piperidin-4-yl)-amino)-s-triazin-2-yl]-1,10-diamino-4,7-diazadecan.

Enthalten die erfindungsgemässen Zusammensetzungen Ultraviolettabsorber, so handelt es sich bei diesen Verbindungen beispielsweise um 2H-Benztriazole, Benzophenone, Oxanilide, α-Cyancinnamate, substituierte Benzoeester oder um Nickelsalze der o-alkylierten sterisch gehinderten phenolischen Benzylphosphonate.

Beispiele von Ultraviolettabsorbern sind in der untenstehende Liste aufgeführt:

<u>2-(2'-Hydroxyphenyl)-benzotriazole</u> wie beispielsweise 5'-Methyl-, 3'.5'-Di-tert.-butyl-, 5'-tert.-Butyl-, 5'-(1,1,3,3-Tetramethyl butyl)-, 5-Chloro-3'.5'-di-tert.-butyl-, 5-Chloro-3'-tert.-butyl-5'-methyl-, 3'-sec.-Butyl-5'-tert.-butyl-, 3'-α-Methylbenzyl-5'-methyl-, 3'-α-Methylbenzyl-5'-methyl-5-chloro-, 4'-Hydroxy-, 4'-Methoxy-, 4'-Octoxy-, 3',5'-Di-tert.-amyl-, 3'-Methyl-5'-carbomethoxyethyl- und 5-Chloro-3',5'-di-tert.-amyl-derivate.

<u>2,4-Bis-(2'-Hydroxyphenyl)-6-alkyl-2-triazine</u> wie beispielsweise 6-Ethyl-, 6-Heptadecyl- oder 6-Undecyl-derivate.

2-Hydroxybenzophenone wie beispielsweise 4-Hydroxy-, 4-Methoxy-, 4-Octoxy-, 4-Decyloxy-, 4-Dodecyloxy-, 4-Benzyloxy-, 4,2',4'-Trihydroxy-, 2,2',4,4'-Tetrahydroxy- oder 2'-Hydroxy-4,4'-dimethoxyderivate.

1,3-Bis-(2'-Hydroxybenzoyl)-benzole wie beispielsweise 1,3-Bis-(2'-hydroxy-4'-hexyloxy-benzoyl)-benzol, 1,3-Bis-(2'-hydroxy-4'-octyloxy-benzoyl)-benzol oder 1,3-Bis-('-hydroxy-4'-dodecyloxybenzoyl)-benzol.

Ester von gegebenenfalls substituierten Benzoesäuren wie beispielsweise Phenylsalicylat, Octylphenylsalicylat, Dibenzoylresorcin, Bis-(4-tert.-butylbenzoyl)-resorcin, Benzoylresorcin, 3,5-Di-tert.-butyl-4-hydroxybenzoesäure-2,4-di-tert.-butylphenylester oder -octadecylester oder -2-methyl-4,6-di-tert.-butylester.

Acrylate wie beispielsweise a-Cyano-ß,ß-diphenylacrylsäureethylester oder -isooctylester, α-Carbomethoxy-zimtsäuremethylester, α-Cyano-ß-methyl-p-methoxy-zimtsäuremethylester oder -butylester oder N-(ß-Carbomethoxyvinyl)-2-methyl-indolin.

Oxalsäurediamide wie beispielsweise 4,4'-Di-octyloxy-oxanilide, 2,2'-Di-octyloxy-5,5'-di-tert.-butyl-oxanilid, 2,2'-Di-dodecyl oxy-5,5'-di-tert.-butyl-oxanilid, 2-Ethoxy-2'-ethyl-oxanilid, N,N'-bis-(3-dimethyl-aminopropyl)-oxalamid, 2-Ethoxy-5-tert.-butyl-2'-ethyl-oxanilid und Mischungen mit 2-Ethoxy-2'-ethyl-5,4'-di-tert.-butyl-oxanilid, oder Mischungen mit ortho- und para-Methoxy- sowie mit o- und p-Ethoxy-disubstituierten Oxaniliden.

Bevorzugte Verwendung als Ultraviolettabsorber in den erfindungsgemässen Zusammensetzungen finden 2-(2-Hydroxy-5-methylphenyl)-2H-benztriazol, 2-(2-Hydroxy-3,5-di-tert.-amylphenyl)-2H-benztriazol, 2-[2-Hydroxy-3,5-di-(α,α-dimethylbenzyl)-phenyl]-2H-benztriazol, 2-(2-Hydroxy-5-tert.-octylphenyl)-2H-benztriazol, 2-Hydroxy-4-octyl-

oxybenzophenon, Nickel-bis-(O-ethyl-3,5-di-tert.-butyl-4-hydroxybenzylphosphonat), 2,4-Dihydroxybenzophenon, 2-(2-Hydroxy-3-.tert.-butyl-5-methylphenyl)-2H-benztriazol oder Nickel-butylaminkomplex mit 2,2'-Thiobis-(4-tert.-butylphenol), 2-Ethoxy-2'-ethyloxanilid oder 2-Ethoxy-2'-ethyl-5,5'-di-tert.-butyloxanilid.

Die stabilisierten polyolefinischen Zusammensetzungen der vorliegenden Erfindung können gegebenenfalls noch weitere Zusätze enthalten. Dazu zählen beispielsweise Stearate, Pigmente, Farbstoffe, Lichtstabilisatoren wie Metalldesaktivatoren, Talk, weitere Füllstoffe, u.v.m.

Die Erfindung betrifft ferner ein Verfahren zum Stabilisieren gesättigter Polyolefine oder Mischungen davon gegen oxidativen, thermischen oder strahlungsinduzierten Abbau, dadurch gekennzeichnet, dass man dem Substrat
a) einen Stabilisator oder eine Stabilisatormischung ausgewählt aus der Gruppe der phenolischen Antioxidantien, der sterisch gehinderten Amine, der Ultraviolettabsorber, der orgnischen Phosphorverbindungen, der Metallsalze von Fettsäuren oder der Thiosynergisten, und

b) ein Hydroxylaminderivat oder eine Mischung davon zusetzt, mit der Massgabe, dass Komponenten a) und b) nicht identisch sind.

Ferner betrifft die Erfindung die Verwendung der oben beschriebenen stabilisierten Polyolefinzusammensetzungen.

Die Hydroxylaminstabilisatoren werden den erfindungsgemässen Zusammensetzungen in einer Menge von 0,01 bis 5 Gew.% zugesetzt. Die tatsächlich anzuwendende Menge hängt vom jeweils zu stabilisierenden Substrat und vom jeweiligen Verwendungszweck ab. Bevorzugt verwendet man 0,025 bis 2 Gew.% des Hydroxylaminderivates und besonders bevorzugt 0,05 bis 1 Gew.%.

Die Hydroxylaminderivate stabilisieren die erfindungsgemässen Zusammensetzungen besonders während der Verarbeitung bei hohen Temperaturen. Das stabilisierte Substrat verfärbt sich relativ wenig, sogar wenn mehrere Extrusionen durchgeführt werden.

Die Einarbeitung der Stabilisatorsubstanzen in die organischen Polymeren erfolgt nach an sich bekannten Verfahren. Die Zudosierung kann während jeder Verarbeitungsstufe vor der Formgebung erfolgen. So kann der Stabilisator beispielsweise mit einem pulverförmigen Polymeren gemischt werden, oder eine Emulsion oder eine Suspension des Stabilisators kann mit einer Lösung, Suspension oder Emulsion des Polymeren vermischt werden. Die stabilisierten polyolefinischen Zusammensetzungen können neben den oben erwähnten Stabilisatoren gegebenenfalls noch weitere Additive oder Zusatzstoffe enthalten. Deren Gewichtsanteil beträgt zwischen 0,01 und 5 Gew.%, bevorzugt zwischen 0,025 und 2 Gew.% und besonders bevorzugt zwischen 0,1 und 0,5 Gew.%.

Die so stabilisierten Materialien können in verschiedenster Form angewendet werden, z.B. als Folien, Fasern, Bändchen, Formmassen, Profile oder als Bindemittel für Lacke, Klebstoffe oder Kitte.

Neben der Einarbeitung der Stabilisatorsubstanzen vor der Formgebung ist es auch möglich, die erfindungsgemässen Zusammensetzungen durch Oberflächenbehandlung den fertiggestellten Artikeln zuzusetzen. Dies ist besonders bei der Behandlung von Fasern von Interesse, wo die vorliegenden Stabilisatoren beispielsweise in Form einer Spinnpräparation nach dem Extrudieren des Fasermaterials auf die Oberfläche gebracht werden.

Beispiele für zusätzliche Additive oder Zusatzstoffe sind die folgenden Substanzen:

Metalldesaktivatoren wie beispielsweise Oxanilide, Isophthalsäuredihydrazide, Sebacinsäure-bis-phenylhydrazide, Bis-benzyliden oxalsäure-dihydrazide, N,N'-Diacetal-adipinsäure-dihydrazide, N,N'-Bis-salicyloyl-oxalsäure-dihydrazide, N,N'-Bis-salicyloyl-hydrazin, N,N'-Bis-(3,5-di-tert.-butyl-4-hydroxyphenylpropionyl)-hydrazin, N-Salicyloyl-N'-salicylalhydrazin, 3-Salicyloyl-amino-1,2,4-triazol oder N,N'-Bis-salicyloyl-thiopropionsäure-dihydrazid.

Nukleierungsmittel wie beispielsweise 4-tert.-Butylbenzoesäure, Adipinsäure, Diphenylessigsäure oder substituierte Sorbitole wie beispielsweise 1,3- oder 2,4-Dibenzylidensorbitol.

Zusätzlich können noch Klärmittel, Antiozonmittel, Gleitmittel wie beispielsweise Stearylalkohol, Füllstoffe, Russ, Asbest, Kaolin, Talkum, Glasfasern, Pigente, optische Aufheller, Flammhemmstoffe oder Antistatika in die erfindungsgemässen Zusammensetzungen eingearbeitet werden.

Beispiel 1: Verarbeitungsstabilität von Polypropylen bei 260°C
Die Grundrezeptur besteht aus 100 Gew.-Teilen unstabilisiertem Polypropylen (Hercules, Profax® 6501) und aus 0,1 Gew.-Teilen Calciumstearat. Die zu testenden Stabilisatoren werden in Methylenchlorid gelöst und in die Grundrezeptur eingearbeitet. Das Lösungsmittel wird unter vermindertem Druck abgezogen und die stabilisatorhaltige Polymermasse anschliessend extrudiert. Es wird ein Extruder verwendet, dessen Innenraum 2,54 cm im Durchmesser beträgt und dessen Förderschnecke sich einhundertmal in der Minute dreht. Die Temperaturen in den einzelnen Teilen des Extruders sind in der folgenden Tabelle angegeben:

| Extruderteil | Temperatur (°C) |
|---|---|
| Zylinder 1 | 232 |
| Zylinder 2 | 246 |
| Zylinder 3 | 260 |
| Förderschnecke 1 | 260 |
| Förderschnecke 2 | 260 |

Während der Extrusion wird der interne Druck durch einen Druckfühler überwacht. Nach jeder ersten, dritten oder fünften Extrusion werden einige Harzpellets entnommen und unter Druck in 3,2 mm dicke Plättchen verformt. Der Yellowness Index dieser Proben wird gemäss ASTM D 1925 bestimmt. Niedrige Yellowness Index Werte bedeuten geringe Vergilbung der Proben.

Das Polypropylen wird als ausreichend stabilisiert angesehen, wenn der interne Druck im Extruder während der fünften Extrusion einen ähnlich hohen Wert wie während der ersten Extrusion besitzt. Die Ergebnisse sind in Tabelle I aufgelistet. Aus Tabelle I ist ersichtlich, dass die Anwesenheit von N,N-Dibenzylhydroxylamin in der Polypropylenzusammensetzung, die zusätzlich ein phenolisches Antioxidans enthält, die Verfärbung während der Verarbeitung bei hohen Temperaturen verhindert. Diese Verfärbung rührt von dem phenolischen Antioxidans her, welches das Polymere während der Verarbeitung stabilisieren soll.

Tabelle I: Verarbeitungsstabilität von Polypropylen bei 260°C

| Stabilisator*) | Stabilisatormenge (Gew.%) | Interner Extruderdruck bei Extrusion Nr. (kg/cm2) 1 | 3 | 5 | Yellowness Index nach Extrusion Nr. 1 | 3 | 5 |
|---|---|---|---|---|---|---|---|
| Grundrezeptur | - | 44.1 | 38.9 | 33.6 | 3.6 | 3.9 | 4.4 |
| Antioxidans A + Hydroxylamin | 0,1<br>0.05 | 51.5 | 48.3 | 43.0 | 2.3 | 2.8 | 4.4 |

*) Antioxidans A = Neopentantetrayl-tetrakis-(3,5-di-tert.-butyl-4-hydroxyhydrocinnamat)

Hydroxylamin 1 = N,N-Dibenzylhydroxylamin

Beispiel 2: Verarbeitungsstabilität von Polypropylen bei 260°C

Die Prozedur von Beispiel 1 wird wiederholt. Nur wird jetzt eine polyolefinische Zusammensetzung verwendet, die zusätzlich noch eine organische Phosphorverbindung enthält. Die Resultate sind in Tabelle II dargestellt:

Tabelle II: Verarbeitungsstabilität von Polypropylen bei 260°C

| Stabilisator*) | Stabilisatormenge (Gew.%) | Interner Extruderdruck bei Extrusion Nr. (kg/cm2) 1 | 3 | 5 | Yellowness Index nach Extrusion Nr. 1 | 3 | 5 |
|---|---|---|---|---|---|---|---|
| Grundrezeptur | - | 44.1 | 38.9 | 33.6 | 3.6 | 3.9 | 4.4 |
| Antioxidans A<br>+<br>Phosphit I<br>+<br>Hydroxylamin I | 0.05<br><br>0.05<br><br>0.05 | 52.5 | 48.3 | 45.2 | 3.7 | 4.5 | 5.4 |

*) Antioxidans A = Neopentantetrayl-tetrakis-(3,5-di-tert.-butyl-4-hydroxyhydrocinnamat)

Phosphit I = Tris-(2,4-di-tert.-butylphenyl)-phosphit

Hydroxylamin l= N,N-Dibenzylhydroxylamin

Die Ergebnisse in Tabelle II zeigen, dass durch die Anwesenheit von N,N-Dibenzylhydroxylamin in einer Polypropylenzusammensetzung, die ein phenolisches Antioxidans und eine organische Phosphorverbindung enthält, die Verfärbung während der Verarbeitung bei hohen Temperaturen gering bleibt, wobei sowohl das Phenol als auch die Phosphorverbindung die ihnen zugedachten Funktionen ausführen.

Beispiel 3: Verarbeitungsstabilität von Polypropylen bei 260°C
In Analogie zu Beispiel 2 werden weitere Polypropylenzusammensetzungen, die sowohl ein phenolisches Antioxidans als auch ein organisches Phosphit und ein Hydroxylaminderivat enthalten, untersucht. Die Ergebnisse sind in Tabelle III dargestellt.

Tabelle III:

| Stabilisator *) | Stabilisatormenge (Gew.%) | Interner Extruderdruck bei Extrusion Nr. (kg/cm2) 1 | 3 | 5 | Yellowness Index nach Extrusion Nr. 1 | 3 | 5 |
|---|---|---|---|---|---|---|---|
| Grundrezeptur | - | 44.1 | 38.9 | 37.8 | 3.3 | 3.4 | 3.6 |
| Antioxidans A + Phosphit I + Hydroxylamin 1 | 0.05 / 0.05 / 0.05 | 51.5 | 52.2 | 50.0 | 3.5 | 3.9 | 4.4 |
| Antioxidans I + Phosphit I + Hydroxylamin 2 | 0.05 / 0.05 / 0.05 | 51.5 | 52.5 | 51.1 | 5.7 | 7.0 | 8.5 |
| Antioxidans A + Phosphit I + Hydroxylamin 3 | 0.05 / 0.05 / 0.05 | 52.2 | 53.6 | 53.3 | 5.5 | 6.0 | 6.3 |

*) Antioxidans A = Neopentantetrayl-tetrakis-(3,5-di-tert.-butyl-4-hydroxyhydrocinnamat

Phosphit I = Tris-(2,4-di-tert.-butylphenyl)-phosphit

Hydroxylamin 1 = N,N-Dibenzylhydroxylamin

Hydroxylamin 2 = N,N'-Dicyclohexyl-N,N'-dihydroxy-p-xylylendiamin

Hydroxylamin 3 = 2-n-Octadecyl-4,4,6,6-di-(pentamethylen)-5-hydroxy-1,3-dioxo-2,5-diazacyclohexan

Beispiel 4: Verarbeitungsstabilität von Polypropylen bei 260°C

In Analogie zu Beispiel 1 werden zusätzliche Polypropylenzusammensetzungen, die ein phenolisches Antioxidans und ein Hydroxylamin derivat enthalten, untersucht. Die Ergebnisse sind in Tabelle IV dargestellt:

Tabelle IV:

| Stabilisator*) | Stabilisatormenge (Gew.%) | Interner Extruderdruck bei Extrusion Nr. (kg/cm2) 1 | 5 | Yellowness Index nach Extrusion Nr. 1 | 5 |
|---|---|---|---|---|---|
| Grundrezeptur | - | 41.0 | 36.3 | 5.0 | 6.2 |
| Antioxidans A + Hydroxylamin 4 | 0.1<br>0.05 | 50.4 | 39.2 | 6.2 | 7.5 |

*) Antioxidans A = Neopentantetrayl-tetrakis-(3,5-di-tert.-butyl-4-hydroxycinnamat)

Hydroxylamin 4 = Di-(1-hydroxy-2,2,6,6-tetramethylpiperidin-4-yl)-sebacat

Beispiel 5: Resistenz von Polypropylenzusammensetzungen gegenüber Gasfading

Die Grundrezeptur besteht aus 100 Teilen unstabilisiertem Polypropylen (Profax® 6501, Hercules) und 0,1 Teilen Calciumstearat. Die unterschiedlichen zu testenden Stabilisatoren werden, wie in Beispiel 1 beschrieben, dem Polypropylen zugemischt. Diese Mischung wird einmal extrudiert und anschliessend granuliert. Das Granulat wird unter Druck bei 193°C zu 3,2 mm dicken Platten geformt und der Yellowness Index der Proben wird gemäss ASTM D 1925 bestimmt. Anschliessend wird die Probe für einen bestimmten Zeitraum (vgl. die folgende Tabelle) bei 60°C einem Gasfadingtest gemäss AATCC Testmethode 23 unterzogen. Der Test wird in einer Gaskammer (Drum Model No. 8727) durchgeführt. Die Ergebnisse sind in der nachfolgenden Tabelle V aufgeführt:

Tabelle V:

| Stabilisator*) | Stabilisatormenge (Gew.%) | Yellowness Index der Probe nach Aufenthalt (Tage) in der Gaskammer bei 60°C 0 | 4 | 14 | 21 | 32 |
|---|---|---|---|---|---|---|
| Grundrezeptur | - | 4.3 | 4.8 | 5.1 | 4.9 | 5.7 |
| Lichtstabilisator a<br>+<br>Hydroxylamin 1 | 0.25<br><br>0.05 | 3.5 | 0.1 | 0.1 | 0.1 | 2.6 |
| Antioxidans A<br>+<br>Lichtstabilisator a<br>+<br>Hydroxylamin 1 | 0.1<br><br>0.25<br><br>0.05 | 2.2 | -0.4 | -0.4 | 0.2 | 0.9 |
| Antioxidans A<br>+<br>Lichtstabilisator b<br>+<br>Hydroxylamin 1 | 0.1<br><br>0.25<br><br>0.05 | 2.8 | 2.5 | 3.2 | 3.5 | 4.0 |
| Antioxidans A<br>+<br>Lichtstabilisator c<br>+<br>Hydroxylamin 1 | 0.1<br><br>0.25<br><br>0.05 | 4.1 | 3.6 | 3.3 | 3.1 | 4.0 |
| Antioxidans A<br>+<br>Lichtstabilisator d<br>+<br>Hydroxylamin 1 | 0.1<br><br>0.25<br><br>0.05 | 3.4 | 2.5 | 2.7 | 2.3 | 5.2 |
| Antioxidans A<br>+<br>Hydroxylamin 1 | 0.1<br><br>0.05 | 2.1 | 1.0 | 2.1 | 2.2 | 2.3 |

Tabelle V (Fortsetzung)

| Stabilisator*) | Stabilisatormenge (Gew.%) | Yellowness Index der Probe nach Aufenthalt (Tage) in der Gaskammer bei 60°C 0 | 4 | 14 | 21 | 32 |
|---|---|---|---|---|---|---|
| Antioxidans B + Lichtstabilisator a + Hydroxylamin 1 | 0.1<br>0.25<br>0.05 | 2.1 | -1.2 | -0.5 | -0.2 | 1.2 |
| Antioxidans B + Lichtstabilisator b + Hydroxylamin 1 | 0.1<br>0.25<br>0.05 | 2.1 | 2.0 | 2.4 | 2.5 | 4.0 |
| Antioxidans B + Lichtstabilisator c + Hydroxylamin 1 | 0.1<br>0.25<br>0.05 | 3.6 | 2.1 | 2.0 | 1.7 | 3.8 |
| Antioxidans B + Lichtstabilisator d + Hydroxylamin 1 | 0.1<br>0.25<br>0.05 | 3.1 | 1.8 | 1.9 | 2.0 | 1.8 |
| Antioxidans B + Hydroxylamin 1 | 0.1<br>0.05 | 1.8 | 1.0 | 0.6 | 1.7 | 1.9 |
| Antioxidans A + Phosphorverb. 1 + Lichtstabilisator a + Hydroxylamin 1 | 0.05<br>0.05<br>0.25<br>0.05 | 2.4 | -0.1 | 0.1 | 1.1 | 6.5 |

*)

| | | |
|---|---|---|
| Lichtstabilisator a | = | Bis-(2.2.6.6-tetramethylpiperidin-4-yl)-sebacat |
| Lichtstabilisator b | = | Polykondensationsprodukt von 1-(2-Hydroxyethyl)-2,2,6,6-tetramethyl-4-hydroxypiperidin und Bernsteinsäure |
| Lichtstabilisator c | = | Polykondensationsprodukt von 2,4-Di-chlor-6-tert.octylamino-s-triazin und 4,4'-Hexamethylen-bis-(amino-2,2,6,6-tetramethylpiperidin) |
| Lichtstabilisator d | = | N,N',N",N"'-Tetrakis-[4,6-bis-(butyl-(2,2,6,6-tetramethylpiperidin-4-yl)-amino)-s-triazin-2-yl]-1,10-diamino-4,7-diazadecan |
| Hydroxylamin 1 | = | N,N-Dibenzylhydroxylamin |
| Antioxidans A | = | Neopentantetrayl-tetrakis-(3,5-di-tert.butyl-4-hydroxycinnamat) |
| Antioxidans B | = | 3,5-Di-tert.butyl-4-hydroxytoluol |
| Phosphorverb. I | = | Tris-(2,4-di-tert.butylphenyl)-phosphit |

Aus Tabelle V geht hervor, dass N,N-Dibenzylhydroxylamin die Verfärbung von Polypropylenzusammensetzungen verhindert, wenn zusätzlich weitere Stabilisatoren anwesend sind, und wenn die Verfärbung durch Gasfading induziert wird. Die zusätzlichen Stabilisatoren sind sterisch gehinderte Lichtstabilisatoren, die in Kombination mit phenolischen Antioxidantien vorliegen können oder in Kombination mit phenolischen Antioxidantien und organischen Phosphiten.

Beispiel 6: Ofenalterung von Polypropylenzusammensetzungen bei 60°C
Die Additive werden dem Polypropylen nach der in Beispiel 1 beschriebenen Prozedur in gelöster Form zugemischt. Die stabilisierte Zusammensetzung wird dann einmal extrudiert und anschliessend granuliert.

Etwa 100 g der erhaltenen Pellets werden in ein 120 ml Gefäss gegeben und eine definierte Anzahl von Tagen bei 60°C in einem Umluftofen gelagert. Die Farbe der Pellets wird durch Messung des Yellowness Index bestimmt. Die Ergebnisse sind in Tabelle VI aufgelistet.

Tabelle VI:

| Stabilisator*) | Stabilisatormenge (Gew.%) | Yellowness Index der Probe nach Aufenthalt (Tage) im Umluftofen bei 60°C 0 | 4 | 10 | 14 | 24 | 39 |
|---|---|---|---|---|---|---|---|
| Grundrezeptur | - | 0.7 | 8.2 | 10.3 | 13.8 | 17.7 | 19.9 |
| Lichtstabilisator a + Hydroxylamin 1 | 0.25<br>0.05 | -3.0 | -1.1 | -2.3 | -1.2 | 4.2 | 5.8 |
| Antoxidans A + Lichtstabilisator a + Hydroxylamin 1 | 0.1<br>0.25<br>0.05 | -1.9 | -0.5 | -1.4 | 0.3 | 1.5 | 3.0 |
| Antioxidans A + Lichtstabilisator b + Hydroxylamin 1 | 0.1<br>0.25<br>0.05 | -1.6 | 4.8 | 7.2 | 9.1 | 12.3 | 13.8 |
| Antoxidans A + Lichtstabilisator c + Hydroxylamin 1 | 0.1<br>0.25<br>0.05 | 0.5 | 1.3 | 0.0 | 2.3 | 3.5 | 6.5 |
| Antioxidans A + Lichtstabilisator d + Hydroxylamin 1 | 0.1<br>0.25<br>0.05 | -0.4 | 1.7 | 0.0 | 2.1 | 2.4 | 3.7 |
| Antioxidans A + Hydroxylamin 1 | 0.1<br>0.05 | -1.4 | 2.8 | 2.6 | 4.5 | 5.2 | 5.5 |

Tabelle VI: (Fortsetzung)

| Stabilisator*) | Stabilisatormenge (Gew.%) | Yellowness Index der Probe nach Aufenthalt (Tage) im Umluftofen bei 60°B | | | | | |
|---|---|---|---|---|---|---|---|
| | | 0 | 4 | 10 | 14 | 24 | 39 |
| Antioxidans B + Lichtstabilisator a + Hydroxylamin 1 | 0.1<br>0.25<br>0.05 | -2.0 | -0.6 | -1.2 | -0.1 | 2.3 | 36.4 |
| Antioxidans B + Lichtstabilisator b + Hydroxylamin 1 | 0.1<br>0.25<br>0.05 | -2.7 | 3.3 | 5.6 | 7.7 | 10.1 | 14.1 |
| Antoxidans B + Lichtstabilisator c + Hydroxylamin 1 | 0.1<br>0.25<br>0.05 | -0.7 | -0.1 | -0.7 | 0.9 | 2.7 | 8.6 |
| Antioxidans B + Lichtstabilisator d + Hydroxylamin 1 | 0.1<br>0.25<br>0.05 | -0.5 | -0.1 | -0.6 | 1.4 | 1.8 | 12.0 |
| Antioxidans B + Hydroxylamin 1 | 0.1<br>0.05 | -1.0 | 1.9 | 2.3 | 4.7 | 5.6 | 6.3 |
| Antioxidans A + Phosphit I + Lichtstabilisator a + Hydroxylamin 1 | 0.05<br>0.05<br>0.25<br>0.05 | -2.3 | -1.2 | -2.7 | -0.5 | -0.7 | 1.0 |

*)

| | | |
|---|---|---|
| Lichtstabilisator a | = | Bis-(2,2,6,6-tetramethylpiperidin-4-yl)-sebacat |
| Lichtstabilisator b | = | Polykondensationsprodukt von 1-(2-Hydroxyethyl)-2,2,6,6-tetramethyl-4-hydroxypiperidin und Bernsteinsäure |
| Lichtstabilisator c | = | Polykondensationsprodukt von 2,4-Dichloro-6-tert.octylamino-s-triazin und 4,4'-Hexamethylen-bis-(amino-2,2,6,6-tetramethylpiperidin) |
| Lichtstabilisator d | = | N,N',N",N"'-Tetrakis-[(4,6,bis-(butyl-2,2,6,6-tetramethylpiperidin-4-yl)-amino)-s-triazin-2-yl]-1,10-diamino-4,7-diazadecan |
| Hydroxylamin 1 | = | N,N-Dibenzylhydroxylamin |
| Antioxidans A | = | Neopentantetrayl-tetrakis-(3,5-di-tert.butyl-4-hydroxyhydrocinnamat) |
| Antioxidans B | = | 3,5-Di-tert.butyl-4-hydroxytoluol |
| Phosphit I | = | Tris-(2,4-di-tert.butylphenyl)-phosphit |

Aus Tabelle VI ist ersichtlich, dass die Verfärbung von polyolefinischen Zusammensetzungen im Ofenalterungstest verringert wird, wenn diese Zusammensetzungen Hydroxylamin und unterschiedliche weitere Stabilisatoren enthalten. Als zusätzliche Stabilisatoren kommen sterisch gehinderte Amine, oder Kombinationen von sterisch gehinderten Aminen mit phenolischen Antioxidantien, bzw. mit phenolischen Antioxidantien und organischen Phosphiten in Frage.

Beispiel 7: Resistenz von Polypropylenzusammensetzungen gegenüber Gasfading

Polypropylenzusammensetzungen werden hergestellt und einem Gasfadingtest unterworfen, wie im Beispiel 5 beschrieben.
Dazu werden 4 g der zu testenden Pellets in ein offenes 20 ml Gefäss gegeben und anschliessend in einer Gaskammer bei 60°C belassen. Die Testergebnisse sind in Tabelle VII aufgelistet:

Tabelle VII:

| Stabilisator*) | Stabilisatormenge (Gew.%) | Yellowness Indes der Probe nach Aufenthalt (Tage in der Gaskammer bei 60°C 0 | 15 | 30 | 45 |
|---|---|---|---|---|---|
| Grundrezeptur | - | -7.3 | -3.2 | -0.4 | -0.7 |
| Antioxidans A + Hydroxylamin 1 | 0.15<br>0.05 | -10.9 | -8.1 | -2.6 | 5.4 |
| Antioxidans A + Phosphit I + Hydroxylamin 1 | 0.05<br>0.05<br>0.05 | -7.0 | -6.2 | -4.7 | -3.5 |

*)

Antioxidans A = Neopentantetrayl-tetrakis-(3,5-di-tert.butyl-4-hydroxyhydrocinnamat)

Hydroxylamin 1 = N,N-Dibenzylhydroxylamin

Phosphit I = Tris-(2,4-di-tert.butylphenyl)-phosphit

Aus Tabelle VII ist ersichtlich, dass N,N-Dibenzylhydroxylamin die durch Gasfading induzierte Verfärbung polyolefinischer Zusammensetzungen, die ein phenolisches Antioxidans oder eine Kombination eines phenolischen Antioxidans und eines organischen Phosphits enthalten, unterbindet.

Beispiel 8: Verarbeitungsstabilität von Polypropylen bei 260°C
In Analogie zu der Prozedur, die in Beispiel 1 beschrieben wurde, stellt man unterschiedliche stabilisierte Polypropylenzusammensetzungen her. Es werden verschiedene phenolische Antioxidantien in Kombination mit N,N-Dibenzylhydroxylamin verwendet. Der Yellowness Index der Proben nach der ersten, der dritten oder der fünften Extrusion ist in Tabelle VIII aufgeführt.

Tabelle VIII:

| Stabilisator*) | Stabilisatormenge (Gew.%) | Yellowness Index nach Extrusion Nr. 1 | 3 | 5 |
|---|---|---|---|---|
| Grundrezeptur | - | 5.2 | 5.7 | 6.5 |
| Antioxidans A + Hydroxylamin 1 | 0.1 / 0.05 | 4.3 | 5.2 | 10.8 |
| Antioxidans B + Hydroxylamin 1 | 0.1 / 0.05 | 4.8 | 4.9 | 5.9 |
| Antioxidans C + Hydroxylamin 1 | 0.1 / 0.05 | 4.4 | 5.5 | 9.1 |
| Antioxidans D + Hydroxylamin 1 | 0.1 / 0.05 | 4.1 | 5.0 | 6.7 |
| Antioxidans E + Hydroxylamin 1 | 0.1 / 0.05 | 4.5 | 5.2 | 6.8 |
| Antioxidans F + Hydroxylamin 1 | 0.1 / 0.05 | 4.5 | 5.5 | 8.3 |
| Antioxidans G + Hydroxylamin 1 | 0.1 / 0.05 | 5.7 | 8.4 | 14.2 |

Tabelle VIII: (Fortsetzung)

| Stabilisator*) | Stabilisatormenge (Gew.%) | Yellowness Index nach Extrusion Nr. 1 | 3 | 5 |
|---|---|---|---|---|
| Antioxidans H + Hydroxylamin 1 | 0.1<br>0.05 | 5.8 | 7.1 | 17.3 |
| Antioxdans I + Hydroxylamin 1 | 0.1<br>0.05 | 8.3 | 9.0 | 11.6 |
| Antioxidans J + Hydroxylamin 1 | 0.1<br>0.05 | 3.8 | 4.6 | 5.5 |
| Antioxidans K + Hydroxylamin 1 | 0.1<br>0.05 | 3.7 | 4.2 | 5.6 |
| Antioxidans L + Hydroxylamin 1 | 0.1<br>0.05 | 4.4 | 5.4 | 9.1 |

*)

Antioxidans A = Neopentantetrayl-tetrakis-(3,5-di-tert.butyl-4-hydroxyhydrocinnamat

Antioxidans B = 3,5-Di-tert.butyl-4-hydroxytoluol

Antioxidans C = n-Octadecyl-3,5-di-tert.butyl-4-hydroxy-hydrocinnamat

Antioxidans D = 1,2,3-Trimethyl-2,4,6-tris-(3,5-di-tert.butyl-4-hydroxybenzyl)-benzol

Antioxidans E = Thiodiethylen-bis-(3,5-di-tert.butyl-4-hydroxyhydrocinnamat

Antioxidans F = 3,6-Dioxaoctamethylen-bis-(3-methyl-5-tert.-butyl-4-hydroxyhydrocinnamat

| | |
|---|---|
| Antioxidans G | = Bis-(3,5-di-tert.butyl-4-hydroxyhydrocinnamoyl)-hydrazid |
| Antioxidans H | = 1,1,3-Tris-(2-methyl-4-hydroxy-5-tert.butyl-phenyl)-butan |
| Antioxidans I | = 2,2'-Ethyliden-bis-(4,5-di-tert.butylphenol) |
| Antioxidans J | = 1,3,5-Tris-(3,5-di-tert.butyl-4-hydroxybenzyl)-isocyanurat |
| Antioxidans K | = 1,3,5-Tris-[2-(3,5-di-tert.butyl-4-hydroxy-cinnamoyloxy)ethyl]-isocyanurat |
| Antioxidans L | = 3,5-Di-(3,5-di-tert.butyl-4-hydroxybenzyl)-mesitol |
| Hydroxylamin 1 | = N,N-Dibenzylhydroxylamin |

Beispiel 9: Verarbeitungsstabilität von Polypropylen bei 260°C
In Analogie zu der Prozedur, die in Beispiel 2 beschrieben wurde, stellt man unterschiedliche stabilisierte Polypropylenzusammensetzungen her. Es werden Gemische aus phenolischen Antioxidantien und organischen Phosphiten mit Hydroxylamin als Stabilisatoren eingesetzt. Der Yellowness Index der Proben nach der ersten, dritten und fünften Extrusion ist in Tabelle IX aufgeführt.

Tabelle IX:

| Stabilisator*) | Stabilisatormenge (Gew.%) | Yellowness Index nach Extrusion Nr. 1 | 3 | 5 |
|---|---|---|---|---|
| Grundrezeptur | 0.1 | 5.2 | 5.7 | 6.5 |
| Antioxidans A + Phosphit II + Hydroxylamin 1 | 0.1<br>0.05<br>0.05 | 4.0 | 4.0 | 6.4 |
| Antioxidans A + Phosphit III + Hydroxylamin 1 | 0.1<br>0.05<br>0.05 | 4.6 | 4.7 | 6.5 |
| Antioxidans A + Phosphit IV + Hydroxylamin 1 | 0.1<br>0.05<br>0.05 | 4.3 | 4.6 | 4.6 |
| Antioxidans A + Phosphit V + Hydroxylamin 1 | 0.1<br>0.05<br>0.05 | 4.5 | 4.8 | 6.0 |
| Antioxidans A + Phosphit VI + Hydroxylamin 1 | 0.1<br>0.05<br>0.05 | 4.5 | 5.6 | 7.5 |

Tabelle IX:

| Stabilisator*) | Stabilisatormenge (Gew.%) | Yellowness Index nach Extrusion Nr. 1 | 3 | 5 |
|---|---|---|---|---|
| Antioxidans C + Phosphit I + Hydroxylamin 1 | 0.1<br>0.05<br>0.05 | 3.8 | 5.2 | 5.5 |
| Antioxidans C + Phosphit IV + Hydroxylamin 1 | 0.1<br>0.05<br>0.05 | 4.5 | 4.9 | 4.9 |

Antioxidans A = Neopentantetrayl-tetrakis-(3,5-di-tert.butyl-4-hydroxyhydrocinnamat)

Antioxidans C = n-Octadecyl-3,5-di-tert.butyl-4-hydroxyhydrocinnamat

Phosphit I = Tris-(2,4-di-tert.butylphenyl)-phosphit

Phosphit II = 3,9-Distearoyloxy-2,4,8,10-tetraoxa-3,9-diphospha-[5,5]-undecan

Phosphit III = Tris-(p-nonylphenyl)-phosphit

Phosphit IV = 3,9-Di-[2,6-di-tert.butyl-4-(2-n-octadecyloxycarbonylethyl)-phenoxy]-2,4,8,10-tetraoxa-3,9-diphospha-[5,5]-undecan

Phosphit V = Tetrakis-(2,4-di-tert.butylphenyl)-4,4'-bis-(diphenylen)-phosphonit

Phosphit VI = Dilaurylphosphit

Hydroxylamin 1 = N,N-Dibenzylhydroxylamin

Beispiel 10: Verarbeitungsstabilität von Polypropylen bei 260°C
Nach der in Beispiel 1 beschriebenen Prozedur werden Polypropylenzusammensetzungen hergestellt, die ein phenolisches Antioxidans und N,N-Dibenzylhydroxylamin enthalten. Diese Zusammensetzungen werden auf ihre Vergilbungseigenschaften bei der Hochtemperaturextrusion hin untersucht. Es werden unterschiedliche Polypropylensubstrate untersucht.

Tabelle X:

| Stabilisator *) bzw. Substrat | Stabilisator-menge (Gew.%) | Yellowness Index nach Extrusion Nr. 1 | 3 | 5 |
|---|---|---|---|---|
| Substrat V | - | 5.2 | 5.7 | 6.5 |
| Substrat V + Antioxidans A + Hydroxylamin 1 | - <br> 0.1 <br> 0.05 | 4.3 | 5.2 | 10.8 |
| Substrat W | - | 4.8 | 8.1 | 7.8 |
| Substrat W + Antioxidans A + Hydroxylamin 1 | - <br> 0.1 <br> 0.05 | 5.8 | 7.2 | 9.9 |
| Substrat X | - | 3.8 | 4.2 | 4.7 |
| Substrat X + Antioxidans A + Hydroxylamin 1 | - <br> 0.1 <br> 0.05 | 3.8 | 3.7 | 7.4 |
| Substrat Y | - | 4.9 | 5.8 | 6.6 |
| Substrat Y + Antioxidans A + Hydroxylamin 1 | - <br> 0.1 <br> 0.05 | 4.6 | 5.6 | 11.1 |

Tabelle X:

| Stabilisator *) bzw. Substrat | Stabilisatormenge (Gew.%) | Yellowness Index nach Extrusion Nr. 1 | 3 | 5 |
|---|---|---|---|---|
| Substrat Z | - | 1.8 | 2.7 | 2.4 |
| Substrat Z + Antioxidans A + Hydroxylamin 1 | - <br> 0.1 <br> 0.05 | 1.8 | 3.0 | 6.8 |

*)

Antioxidans A = Neopentantetrayl-tetrakis-(3,5-di-tert.butyl-4-hydroxyhydrocinnamat

Hydroxylamin 1 = N,N-Dibenzylhydroxylamin

Verwendete Substrate: Jedes Substrat enthält Polypropylenharz und 0,1 Gew.% Calciumstearat

Substrat V = Profax® 6501, Hercules

Substrat W = Fortilene®, Soltex

Substrat X = RMO®, Gulf

Substrat Y = 8600, Arco

Substrat Z = Marlex® GP, Phillips

Beispiel 11: Verarbeitungsstabilität von Polypropylen bei 260°C
Es wird das in Beispiel 1 beschriebene Herstellungs- und Testverfahren durchgeführt. Anstelle des dort verwendeten N,N-Dibenzylhydroxylamins werden andere Hydroxylaminderivate eingesetzt (vgl. Tabelle XI). Die Ergebnisse in Tabelle XI zeigen, dass Hydroxylaminderivate einen zusätzlichen Stabilisierungseffekt liefern, insbesondere N,N-Di-n-octylhydroxylamin.

Tabelle XI:

| Stabilisator*) | Stabilisator (Gew.%) | Interner Extruderdruck bei Extrusion Nr. (kg/cm2) 1 | 3 | 5 | Yellowness Index nach Extrusion Nr. 1 | 3 | 5 |
|---|---|---|---|---|---|---|---|
| Grundrezeptur | - | 43.0 | 39.9 | 35.7 | 4.3 | 6.1 | 7.4 |
| Antioxidans A + Hydroxylamin 1 | 0.1<br>0.05 | 49.4 | 48.3 | 45.2 | 1.7 | 2.7 | 4.1 |
| Antioxidans A + Hydroxylamin 2 | 0.1<br>0.05 | 50.4 | 48.3 | 45.2 | 5.7 | 8.0 | 10.0 |
| Antioxidans A + Hydroxylamin 4 | 0.1<br>0.05 | 51.5 | 50.4 | 47.3 | 5.0 | 7.9 | 11.1 |
| Antioxidans A + Hydroxylamin 5 | 0.1<br>0.05 | 48.3 | 47.2 | 43.0 | 2.9 | 5.3 | 10.8 |
| Antioxidans A + Hydroxylamin 6 | 0.1<br>0.05 | 49.4 | 47.3 | 44.1 | 1.5 | 3.0 | 3.7 |
| Antioxidans A + Hydroxylamin 7 | 0.1<br>0.05 | 52.5 | 51.5 | 49.0 | 7.1 | 9.5 | 11.7 |
| Antioxidans A + Hydroxylamin 8 | o.1<br>0.05 | 52.5 | 51.1 | 48.3 | 6.7 | 9.0 | 11.1 |
| Antioxidans A + Hydroxylamin 9 | 0.1<br>0.05 | 50.4 | 51.5 | 49.4 | 7.0 | 9.2 | 11.2 |

*)

Antioxidans A = Neopentantetrayl-tetrakis-(3,5-di-tert.butyl-4-hydroxyhydrocinnamat

Hydroxylamin 1 = N,N-Dibenzylhydroxylamin

Hydroxylamin 2 = N,N'-Dicyclohexyl-N,N'-dihydroxy-p-xylylendiamin

Hydroxylamin 4 = Di-(1-hydroxy-2,2,6,6-tetramethylpiperidin-4-yl)-sebacat

Hydroxylamin 5 = N-Cyclohexylhydroxylamin

Hydroxylamin 6 = N,N-Di-n-octylhydroxylamin

Hydroxylamin 7 = 1-Hydroxy-2,2,6,6-tetramethyl-benzoxypiperidin

Hydroxylamin 8 = 1-Hydroxy-2,2,6,6-tetramethyl-4-(3,5-di-tert.butyl-4-hydroxyhydrocinnamoyloxy)-piperidin

Hydroxylamin 9 = N-(1-Hydroxy-2,2,6,6-tetramethylpiperidin-4-yl)-ε-caprolactam

Beispiel 12: Verarbeitungsstabilität von Polyethylen bei 274°C

Eine Grundrezeptur enthaltend HD-Polyethylen (HHM®-4903X, Phillips) wird, wie in Beispiel 1 beschrieben, mit den betreffenden Stabilisatoren kompoundiert und extrudiert. Es wird der Yellowness Index bzw. der Meltflow Index gemäss ASTM D-1238 (Kondition N) gemessen. Die Resultate sind in der folgenden Tabelle XII aufgeführt.

Tabelle XII:

| Stabilisator*) | Stabilisator-menge (Gew.%) | Melt-Flow Index nach Extrusion Nr. (g/10 min) 1 | 5 | Yellowness Index nach Extrusion Nr. 1 | 3 | 5 |
|---|---|---|---|---|---|---|
| Grundrezeptur | - | 2.9 | 1.7 | -10.7 | -10.9 | -10.9 |
| Antioxidans A + Hydroxylamin 1 | 0.04<br>0.02 | 4.5 | 4.1 | -3.8 | 3.9 | 7.1 |
| Antioxidans A + Hydroxylamin 1 | 0.04<br>0.04 | 4.8 | 4.7 | 5.0 | 3.4 | 7.6 |
| Antioxidans A + Hydroxylamin 1 | 0.04<br>0.08 | 4.9 | 5.2 | -7.3 | -1.5 | 4.1 |
| Antioxidans A + Phosphit I + Hydroxylamin 1 | 0.02<br>0.02<br>0.04 | 5.1 | 4.7 | -5.9 | 0.4 | 4.1 |
| Antioxidans I + Phosphit I + Hydroxylamin 1 | 0.02<br>0.02<br>0.04 | 4.8 | 4.5 | -5.2 | 2.0 | 5.5 |

*)

Antioxidans A = Neopentantetrayl-tetrakis-(3,5-di-tert.butyl-4-hydroxyhydrocinnamat)

Antioxidans I = 2,2'-Ethylen-bis-(4,6-di-tert.butylphenol)

Phosphit I = Tris-(2,4-di-tert.butylphenyl)-phosphit

Hydroxylamin 1 = N,N-Dibenzylhydroxylamin

Beispiel 13: Verarbeitungsstabilität von Polyethylen bei 274°C

Gemäss der in Beispiel 12 beschriebenen Prozedur werden verschiedene Polyethylenzusammensetzungen enthaltend ein phenolisches Antioxidans und gegebenenfalls N,N-Dibenzylhydroxylamin auf ihre Verarbeitungsstabilität hin untersucht. Es wird der Yellowness Index der Proben bzw. deren Melt-Flow Index gemessen. Die Resultate sind in der nachfolgenden Tabelle XIII enthalten.

Tabelle XIII:

| Stabilisator*) | Stabilisatormenge (Gew.%) | Melt-Flow Index nach Extrusion Nr. (g/10 min) 1 | 5 | Yellowness Index nach Extrusion Nr. 1 | 3 | 5 |
|---|---|---|---|---|---|---|
| Substrat R | - | 2.9 | 2.1 | -9.6 | -8.7 | -7.7 |
| Substrat R + Antioxidans C + Hydroxylamin 1 | - <br> 0.01 <br> 0.01 | 4.0 | 3.1 | -8.1 | -4.5 | -3.5 |
| Substrat R + Antioxidans C + Hydroxylamin 1 | - <br> 0.02 <br> 0.02 | 3.1 | 2.5 | -9.9 | -9.7 | -9.3 |
| Substrat S + Antioxidans A + Hydroxylamin 1 | - <br> 0.02 <br> 0.02 | 4.6 | 3.6 | -7.3 | -4.2 | -1.0 |
| Substrat T | - | 52.0 | 47.8 | -7.9 | -8.1 | -7.4 |
| Substrat T + Antioxidans A + Hydroxylamin 1 | — <br> 0.02 <br> 0.02 | 58.9 | 57.0 | -7.4 | -5.8 | -4.2 |
| Substrat U | - | 32.0 | 23.5 | -6.1 | -5.2 | -2.9 |
| Substrat U + Antioxidans A + Hydroxylamin 1 | - <br> 0.02 <br> 0.02 | 34.0 | 35.6 | -5.7 | 1.8 | 11.1 |

*)

| | | |
|---|---|---|
| Antioxidans A | = | Neopentantetrayl-tetrakis-(3,5-di-tert.butyl-4-hydroxyhydrocinnamat) |
| Antioxidans C | = | n-Octadecyl-3,5-di-tert.butyl-4-hydroxyhydrocinnamat |
| Hydroxylamin 1 | = | N,N-Dibenzylhydroxylamin |
| Substrat R | = | HHM®-4903, Phillips, HD-Polyethylen |
| Substrat S | = | Chemplex® 5602, Chemplex, HD-Polyethylen |
| Substrat T | = | DNDU® 1062, Union Carbide, LD-Polyethylen |
| Substrat U | = | Exxon Polyethylen, Lineares LD-Polyethylen (Unipol Prozess) |

Beispiel 14:

Nach der allgemeinen Prozedur in Beispiel 6 werden Polypropylenformulierungen (Profax ®6501, Hercules) hergestellt, die 0,1 Gew.% Calciumstearat, ein phenolisches Antioxidans und N,N-Dibenzylhydroxylamin enthalten. Ein Teil dieser Formulierungen wird einmal extrudiert und dann unter Druck zu 3,2 mm dicken Plättchen verformt, wie in Beispiel 5 beschrieben. Ein weiterer Anteil der Polypropylenformulierung wird fünfmal extrudiert und anschliessend zu Plättchen verformt.

Der Yellowness Index der Probeplättchen wird bestimmt. Anschliessend werden die Proben bei 150°C im Umluftofen gealtert. In definierten Zeitabschnitten wird der Yellowness Index der Proben ermittelt, bis Zersetzung eingetreten ist.

Eine Probe wird dann als zersetzt angesehen, wenn Risse oder Braunfärbung der Ecken auftreten. Die Testergebnisse sind in der nachfolgenden Tabelle aufgelistet.

00138767

Tabelle XIV

| Stabilisator | Stabilisatormenge (Gew.%) | Yellowness Index nach Stunden (1 Extrusion) | | | | | Yellowness Index nach Stunden (5 Extrusionen) | | | | | Zersetzungszeitpunkt (Std. | |
|---|---|---|---|---|---|---|---|---|---|---|---|---|---|
| | | 0 | 100 | 325 | 485 | 1000 | 0 | 100 | 325 | 485 | 1000 | 1 Extrus. | 5 Extrus. |
| Grundrezeptur | - | 3.6 | - | - | - | - | 4.4 | - | - | - | - | 20 | 20 |
| Antioxidans A<br>+<br>Hydroxylamin 1 | 0.1<br><br>0.05 | 2.3 | 10.7 | 28 | 36 | 45 | 4.4 | 14 | 30 | 39 | 47 | 1105 | 1040 |

*)

Antioxidans A = Neopentantetrayl-tetrakis-(3,5-di-tert.butyl-4-hydroxyhydrocinnamat)

Hydroxylamin 1 = N,N-Dibenzylhydroxylamin

Beispiel 15: Verarbeitungsstabilität von Polypropylen bei 260°C
Wie in Beispiel 11 wird N,N-Di-tert.butylhydroxylamin anstelle von N,N-Dibenzylhydroxylamin in der stabilisierten Polypropylenzusammensetzung verwendet. Die Ergebnisse sind in der nachfolgenden Tabelle XV aufgeführt.

Tabelle XV:

| Stabilisator*) | Stabilisatormenge (Gew.%) | Int.Extruderdruck bei Extrusion Nr.(kg/cm2) 1 | 3 | 5 | Yellowness Index nach Extrusion Nr 1 | 3 | 5 |
|---|---|---|---|---|---|---|---|
| Grundrezeptur | - | 37.8 | 35.7 | - | 3.6 | 4.3 | 4.8 |
| Antioxidans A + Hydroxylamin 10 | 0.1<br>0.05 | 50.4 | 48.3 | 52.2 | 1.9 | 4.9 | 7.1 |

*)

Antioxidans A = Neopentantetrayl-tetrakis-(3,5-di-tert.butyl-4-hydroxyhydrocinnamat)

Hydroxylamin 10 = N,N-Di-tert.butylhydroxylamin

Beispiel 16: Verarbeitungsstabilität von Polypropylen bei 260°C
In Analogie zu Beispiel 1 werden Polypropylenzusammensetzungen hergestellt. Diese enthalten jetzt neben dem phenolischen Antioxidans zusätzlich einen Thiosynergisten. Es wird die Verarbeitungsstabilität dieser Zusammensetzungen getestet, indem man den internen Extruderdruck bei mehreren aufeinanderfolgenden Extrusionen misst und die Yellowness Index Werte der einzelnen Proben ermittelt. Die Ergebnisse sind in der nachfolgenden Tabelle dargestellt.

Tabelle XVI:

| Stabilisator*) | Stabilisatormenge (Gew.%) | Int.Extruderdruck bei Extrusion Nr.(kg/cm2) 1 | 3 | 5 | Yellowness Index nach Extrusion Nr 1 | 3 | 5 |
|---|---|---|---|---|---|---|---|
| Grundrezeptur | - | 37.8 | 35.2 | - | 3.6 | 4.3 | 4.8 |
| Antioxidans A + Thiosynergist p + Hydroxylamin 1 | 0.1<br>0.05<br>0.05 | 52.5 | 50.4 | 49.4 | 2.2 | 3.2 | 4.2 |

*)

Antioxidans A = Neopentantetrayl-tetrakis-(3,5-di-tert.butyl-4-hydroxyhydrocinnamat)

Thiosynergist p = Distearylthiodipropionat

Hydroxylamin 1 = N,N-Dibenzylhydroxylamin

Beispiele 17-20:

Nach dem in den Beispielen 5 bzw. 6 beschriebenen Verfahren werden Polypropylenproben hergestellt und auf ihre Resistenz gegenüber Gas-Fading und Ofenalterung untersucht. Die untersuchten Proben enthalten folgende Stabilisatorkombinationen:

Beispiel 17: einen Ultraviolettabsorber

Beispiel 18: einen Ultraviolettabsorber und ein organisches Phosphit

Beispiel 19: einen Ultraviolettabsorber und ein sterisch gehindertes Amin

Beispiel 20: ein sterisch gehindertes Amin, ein organisches Phosphit und einen Thiosynergisten

Bei allen diesen Proben ist eine verringerte Vergilbung festzustellen, wenn zusätzlich ein Hydroxylaminderivat verwendet wird.

Beispiel 21: Einfluss von Calziumstearat auf die Verfärbung von Polypropylen, das bei 260°C verarbeitet wurde.

In Analogie zu der Prozedur, die in Beispiel 1 beschrieben wurde, wird Polypropylen (Profax® 6501, Hercules) extrudiert und der Yellowness-Index jeweils nach der ersten, dritten und fünften Extrusion bestimmt. Die Basisformulierung enthält hier im Gegensatz zu Beispiel 1 kein Calziumstearat. Die Testplättchen werden bei 232°C verformt. Die Ergebnisse sind in der folgenden Tabelle XVII aufgelistet.

Tabelle XVII:

| Stabilisator*) | Stabilisatormenge (Gew.%) | Yellowness Index nach Extrusion Nr. | | |
|---|---|---|---|---|
| | | 1 | 3 | 5 |
| Grundrezeptur | - | 1.6 | 2.5 | 2.9 |
| Antioxidans A + Hydroxylamin 1 | 0.1<br>0.05 | 2.2 | 8.0 | 12.8 |
| Calziumstearat + Hydroxylamin 1 | 0.1<br>0.05 | 1.0 | 1.8 | 3.3 |
| Calziumstearat + Antioxidans A + Hydroxylamin 1 | 0.1<br>0.1<br>0.05 | 1.0 | 1.5 | 4.0 |

*) Hydroxylamin 1 = N,N-Dibenzylhydroxylamin

Antioxidans A = Neopentantetrayl-tetrakis-(3,5-tert.butyl-4-hydroxyhydrocinnamat

Beispiel 22: Einfluss von Calziumstearat auf die Verfärbung von HD-Polyethylen, das bei 274°C verarbeitet wurde

Gemäss dem in Beispiel 12 angegebenen Verfahren wird HD-Polyethylen (HHM®-4903, Phillips) extrudiert und anschliessend wird der Yellowness Index der Proben gemessen, um die Verfärbung festzustellen. Die Basisformulierung enthält kein Calziumstearat. Die Testplättchen werden bei 193°C verformt. Die Ergebnisse sind in der folgenden Tabelle XVIII aufgelistet.

Tabelle XVIII

| Stabilisator*) | Stabilisatormenge (Gew.% | Yellowness Index nach Extrusion Nr. 1 | 3 | 5 |
|---|---|---|---|---|
| Grundrezeptur | - | -2.2 | -2.9 | -2.8 |
| Antioxidans A + Hydroxylamin 1 | 0.1<br>0.05 | -1.0 | 3.1 | 5.6 |
| Calziumstearat + Hydroxylamin 1 | 0.1<br>0.05 | -3.9 | -2.3 | -1.3 |
| Calziumstearat + Antioxidans A + Hydroxylamin 1 | 0.1<br>0.1<br>0.05 | -2.6 | -0.6 | 0.8 |

*) Hydroxylamin 1 = N,N-Dibenzylhydroxylamin

Antioxidans A = Neopentantetrayl-tetrakis-(3,5-di-tert.butyl-4-hydroxyhydrocinnamat

Beispiel 23: Beeinflussung der Verarbeitungsstabilität (bei 274°C) von HD-Polyethylen durch Calziumstearat

In Analogie zu den in Beispielen 12 und 22 angegebenen Verfahren werden Melt-Flow Indizes von HD-Polyethylen (HHM®-4903, Phillips) nach einer, drei oder fünf Extrusionen bestimmt. Die Grundrezeptur enthält kein Calziumstearat. Die Ergebnisse sind in der nachfolgenden Tabelle XIX aufgelistet.

Tabelle XIX:

| Stabilisator*) | Stabilisatormenge (Gew.%) | Melt-Flow Index nach Extrusion Nr. (g/10 min) 1 | 3 | 5 |
|---|---|---|---|---|
| Grundrezeptur | - | 4.5 | 3.5 | 2.5 |
| Antioxidans A + Hydroxylamin 1 | 0.1<br>0.05 | 5.8 | 5.75 | 5.75 |
| Calziumstearat + Antioxidans A + Hydroxylamin 1 | 0.1<br>0.1<br>0.05 | 5.8 | 5.75 | 5.75 |

*) Hydroxylamin 1 = N,N-Dibenzylhydroxylamin
Antioxidans A = Neopentantetrayl-tetrakis-(3,5-di-tert.butyl-4-hydroxyhydrocinnamat

Patentansprüche

1. Stabilisierte Zusammensetzungen enthaltend
a) ein gesättigtes Polyolefin oder eine Mischung solcher Polyolefine,
b) mindestens einen Stabilisator oder ein Stabilisatorgemisch aus der Gruppe der phenolischen Antioxidantien, der sterisch gehinderten Amine, der Ultraviolettabsorber, der organischen Phosphorverbindungen, der Metallsalze von Fettsäuren oder der Thiosynergisten, sowie
c) mindestens ein Hydroxylaminderivat oder ein Gemisch solcher Derivate, mit der Massgabe, dass die Komponenten b) und c) nicht identisch sind.

2. Zusammensetzung gemäss Anspruch 1, worin als Komponente c) ein Hydroxylaminderivat gemäss einer der Formeln I bis XIV verwendet wird

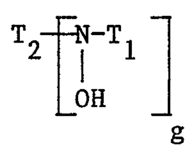

(I),

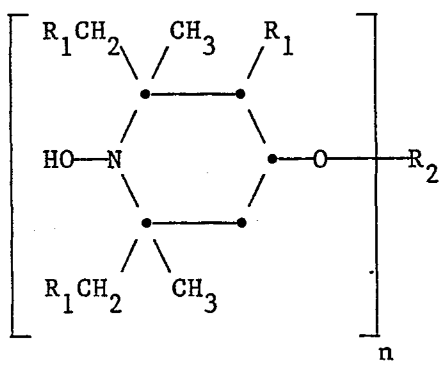

(II),

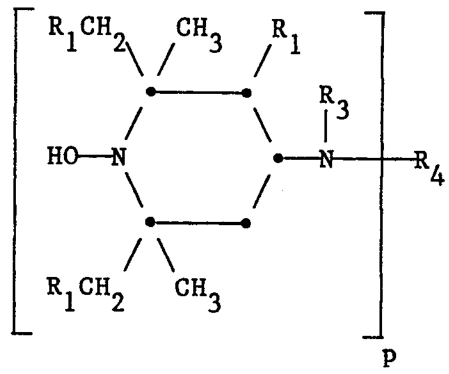

(III),

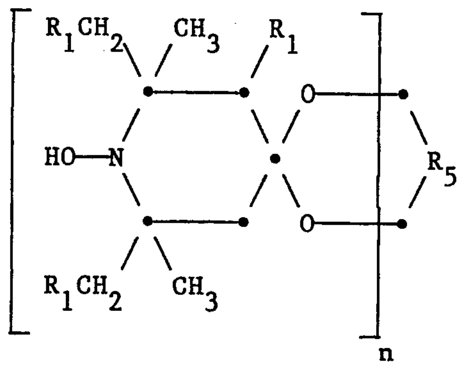

(IV),

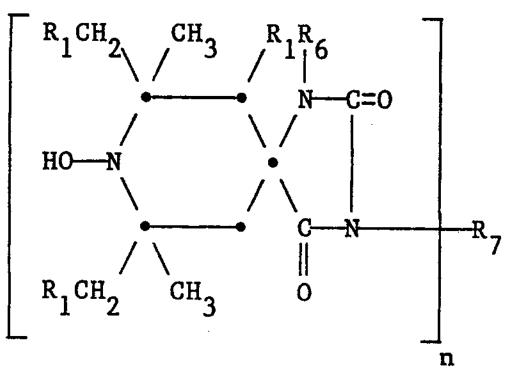

(V),

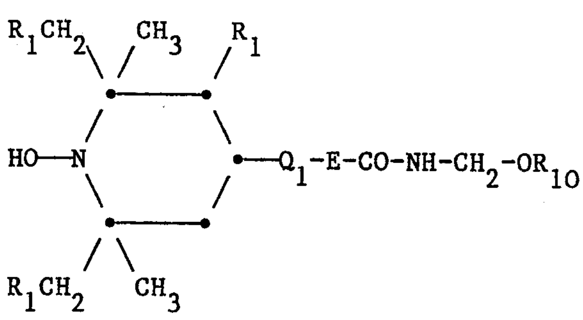

(VI),

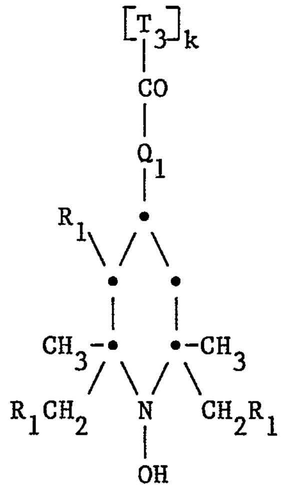

(VII),

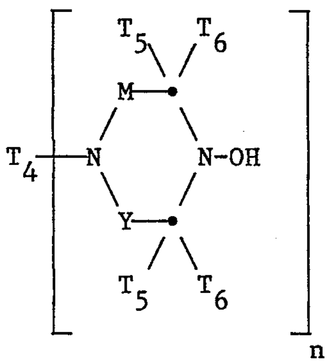

(VIII),

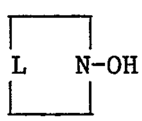

(IX),

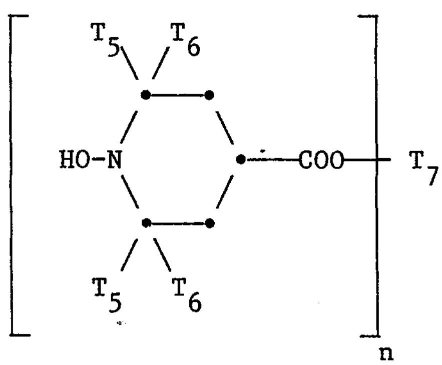

(X),

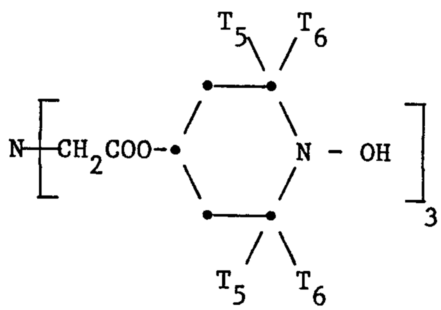

(XI),

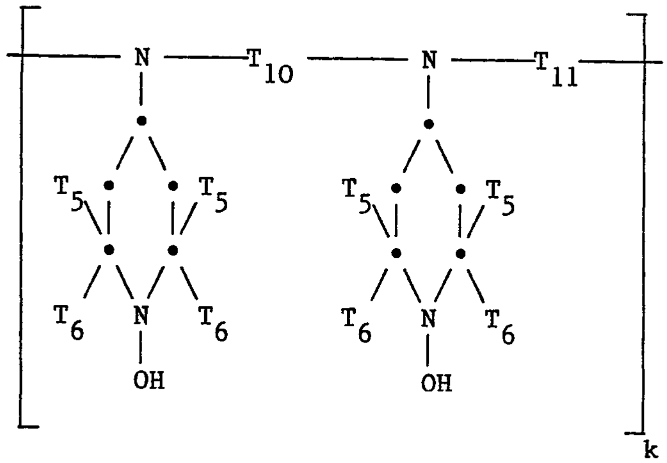

(XII),

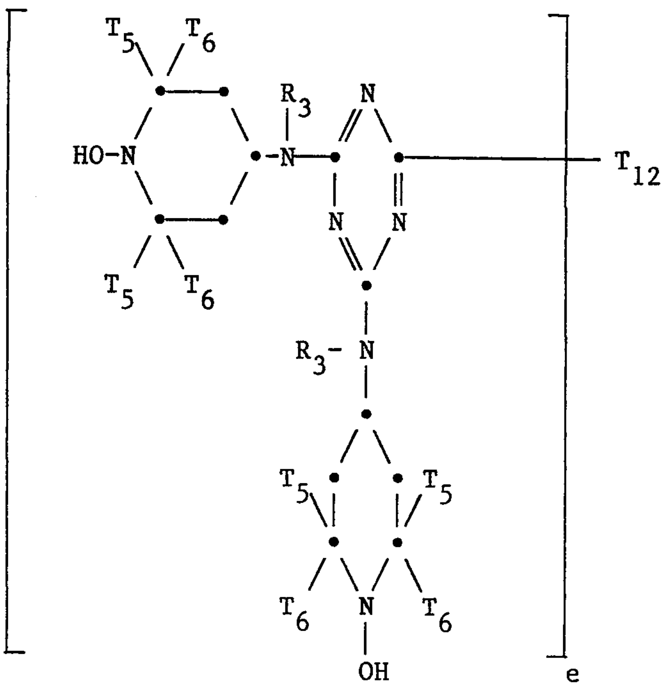

(XIII), oder

# 00138767



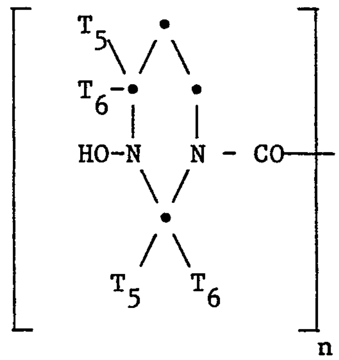

(XIV),

worin $T_1$ $C_1$-$C_{36}$Alkyl, $C_5$-$C_{12}$Cycloalkyl, $C_7$-$C_9$Aralkyl, das gegebenenfalls mit $C_1$-$C_4$Alkyl oder mit ein oder zwei Halogenatomen substituiert ist, bedeutet, oder worin

g 1, 2, 3 oder 4 bedeutet;

worin $T_2$, im Falle von g=1, Wasserstoff bedeutet oder eine der für $T_1$ angegebenen Bedeutungen besitzt;

worin $T_2$, im Falle von g=2, $C_2$-$C_{12}$Alkylen, $C_6$-$C_{10}$Cycloalkylen. $C_6$-$C_{10}$Arylen, $C_8$-$C_{10}$Alkylenarylenalkylen bedeutet oder ein Rest

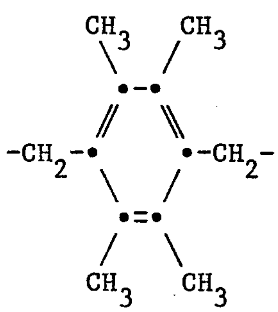

ist;

worin $T_2$, im Falle von g=3, $C_3$-$C_6$Alkantriyl oder ein Rest

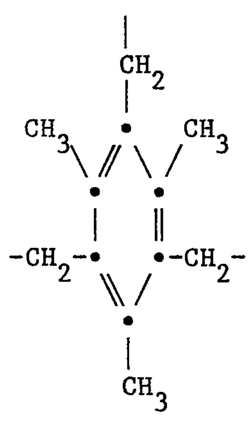

ist;

worin $T_2$, im Falle von g=4, $C_4$-$C_6$Alkantetrayl bedeutet; und worin

$R_1$ Wasserstoff oder Methyl ist,

n 1 oder 2 bedeutet;

$R_2$, im Falle von n=1, Wasserstoff oder $C_1$-$C_{18}$Alkyl ist, das gegebenenfalls durch ein oder mehrere Sauerstoffatome unterbrochen sein kann, wobei mehrere Sauerstoffatome jedoch nicht in direktem Kontakt stehen, oder worin $R^2$, im Falle von n=1, Cyanethyl, Benzyl, Glycidyl, ein monovalenter aliphatischer, cycloaliphatischer, araliphatischer oder aromatischer Acylrest, ein monovalenter Acylrest einer Carbamidsäure, ein monovalenter Rest einer phosphorhaltigen Säure oder ein monovalenter Silylrest ist; oder worin

$R_2$, im Falle von n=2, $C_1$-$C_{12}$Alkylen, $C_4$-$C_{12}$Alkenylen, Xylylen, ein aliphatischer, cycloaliphatischer, araliphatischer oder aromatischer Diacylrest oder Dicarbamoylrest ist, oder ein divalenter Rest einer phosphorhaltigen Säure ist, oder ein divalenter Silylrest bedeutet; und worin

p 1, 2 oder 3 bedeutet,

$R_3$ Wasserstoff, $C_1$-$C_{12}$Alkyl, $C_5$-$C_7$Cycloalkyl, $C_7$-$C_8$Aralkyl, $C_2$-$C_{18}$-Alkanoyl, $C_3$-$C_5$Alkenoyl oder Benzoyl ist; und worin

$R_4$, im Falle von p=1, Wasserstoff, $C_1$-$C_{18}$Alkyl, $C_5$-$C_7$Cycloalkyl oder $C_2$-$C_8$Alkenyl ist, das gegebenenfalls mit Cyan substituiert ist oder eine carbonylhaltige Gruppe oder eine Acylaminogruppe enthält, oder $R_4$ ist Glycidyl, eine Gruppe der Formel $-CH_2-CH(OH)-Z$ oder eine Gruppe der Formel -CONH-Z, worin Z Wasserstoff, Methyl oder Phenyl bedeutet; oder worin

$R_4$, im Falle von p=2, $C_2$-$C_{12}$Alkylen, $C_6$-$C_{12}$Arylen, Xylylen, eine Gruppe $-CH_2CH(OH)CH_2-$ oder eine Gruppe $-CH_2-CH(OH)-CH_2-O-X-O-CH_2-CH(OH)-CH_2-$ ist, wobei X $C_2$-$C_{10}$Alkylen, $C_6$-$C_{15}$Arylen oder $C_6$-$C_{12}$Cycloalkylen bedeutet; oder $R_4$ ist ein aliphatischer, cycloaliphatischer oder aromatischer Diacylrest oder Dicarbamoylrest, oder eine Ketogruppe, aber nur mit der Massgabe, dass $R_3$ nicht Alkanoyl, Alkenoyl oder Benzoyl bedeutet; oder $R_3$ und $R_4$ bilden im Falle von p=1 einen cyclischen aliphatischen oder aromatischen 1,2- oder 1,3-Diacylrest oder sie bilden zusammen einen divalenten aliphatischen Monoacylrest oder $R_4$ ist ein Rest

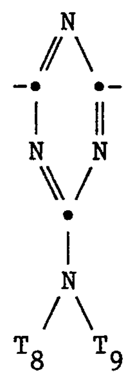

worin $T_8$ und $T_9$ unabhängig voneinander Wasserstoff oder $C_1$-$C_{18}$Alkyl sind, oder worin $T_8$ und $T_9$ zusammen $C_4$-$C_6$Alkylen oder 3-Oxapentamethylen bedeuten; und worin

$R_4$, im Falle von p=3, 2,4,6-Triazinyl ist; worin

$R_5$, im Falle von n=1, $C_2$-$C_8$Alkylen oder Hydroxyalkylen oder $C_4$-$C_{22}$-Acyloxyalkylen bedeutet; oder worin

$R_5$, im Falle von n=2, eine Gruppe $(-CH_2)_2C(CH_2-)_2$ bedeutet; und worin

$R_6$ Wasserstoff, $C_1$-$C_{12}$Alkyl, Allyl, Benzyl, Glycidyl oder $C_2$-$C_6$Alkoxyalkyl ist; und worin

$R_7$, im Falle von n=1, Wasserstoff, $C_1$-$C_{12}$Alkyl, $C_3$-$C_5$Alkenyl, $C_7$-$C_9$-Aralkyl, $C_5$-$C_7$Cycloalkyl, $C_2$-$C_4$Hydroxyalkyl, $C_2$-$C_6$Alkoxyalkyl, $C_6$-$C_{10}$Aryl, Glycidyl, eine Gruppe der Formel $-(CH_2)_m$-O-CO-Q oder der Formel $-(CH_2)_m$-COO-Q bedeutet, wobei m 1 oder 2 ist und Q $C_1$-$C_4$Alkyl oder Phenyl bedeutet; oder worin

$R_7$, im Falle von n=2, $C_2$-$C_{12}$Alkylen, $C_6$-$C_{12}$Arylen, eine Gruppe $-CH_2-CH(OH)-CH_2-O-X-O-CH_2-CH(OH)-CH_2-$ bedeutet, wobei X $C_2$-$C_{10}$Alkylen, $C_6$-$C_{15}$Arylen oder $C_6$-$C_{12}$Cycloalkylen oder eine Gruppe $-CH_2-CH(OZ')-CH_2-(OCH_2-CH(OZ')-CH_2)_2-$ ist, worin Z' Wasserstoff, $C_1$-$C_{18}$-Alkyl, Allyl, Benzyl, $C_2$-$C_{12}$Alkanoyl oder Benzoyl ist; oder worin $Q_1$ $-N(R_8)-$ oder -O- ist, E $C_1$-$C_3$Alkylen oder eine Gruppe $-CH_2-CHR_9-O-$ bedeutet, worin $R_9$ Wasserstoff, Methyl oder Phenyl ist oder worin E die Gruppe $-(CH_2)_3-NH-$ oder eine direkte Bindung bedeutet; und worin

$R_{10}$ Wasserstoff oder $C_1$-$C_{18}$Alkyl bedeutet, $R_8$ Wasserstoff, $C_1$-$C_{18}$-Alkyl, $C_5$-$C_7$Cycloalkyl, $C_7$-$C_{12}$Aralkyl, Cyanoethyl, $C_6$-$C_{10}$Aryl oder die Gruppe $-CH_2-CH(R_9)-OH$ ist, worin $R_9$ die oben definierte Bedeutung besitzt, oder worin $R_8$ schliesslich eine Gruppe der Formel

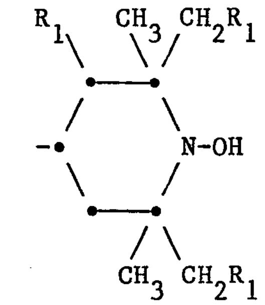

oder der Formel

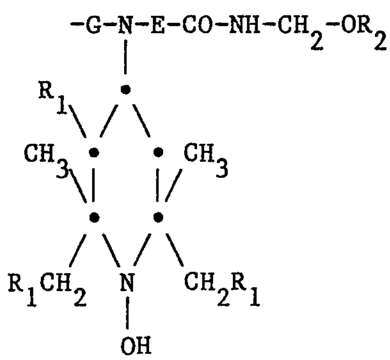

bedeutet, worin G $C_2$-$C_6$Alkylen oder $C_6$-$C_{12}$Arylen ist, oder worin $R_8$ auch eine Gruppe $-E-CO-NH-CH_2-OR_{10}$ ist; Formel VII bedeutet die wiederkehrende Struktureinheit eines Polymers, worin $T_3$ Ethylen oder 1,2-Propylen ist, oder $T_3$ ist die wiederkehrende Struktureinheit in einem Copolymeren eines α-olefinischen Restes mit einem Alkylacrylat oder -methacrylat, wobei k zwischen 2 und 100 ist;

$T_4$ hat dieselbe Bedeutung wie $R_4$ im Falle von p=1 oder p=2;

$T_5$ ist Methyl;

$T_6$ ist Methyl oder Ethyl, oder $T_5$ und $T_6$ bilden zusammen Tetramethylen oder Pentamethylen oder es liegt eine Mischung besagter Hydroxylaminderivate vor;

M und Y sind unabhängig voneinander Methylen oder Carbonyl;

L bedeutet geradkettiges oder verzweigtes $C_4$-$C_7$Alkylen, 3-Oxapentamethylen oder 3- Hydroxyazapentamethylen;

$T_7$ besitzt dieselbe Bedeutung wie $R_7$;

$T_{10}$ und $T_{11}$ sind unabhängig voneinander $C_2$-$C_{12}$Alkylen oder $T_{11}$ ist eine Gruppe der Formel

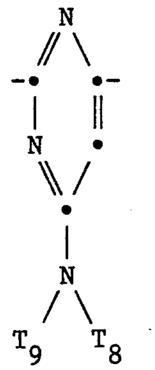 ;

und $T_{12}$ ist eine Gruppe der Formel

$$-NH-(CH_2)_a-\underset{|}{N}-(CH_2)_b-\underset{|}{N}-[(CH_2)_c-\underset{|}{N}]_d-H$$

worin a, b und c unabhängig voneinander 2 oder 3 sind, und d die Werte 0 oder 1 annimmt, worin

e 3 oder 4 bedeutet, und

$T_{13}$ dieselbe Bedeutung wie $R_2$ besitzt mit der Massgabe, dass $T_{13}$ nicht Wasserstoff ist, wenn n=1 ist.

3. Zusammensetzung gemäss Anspruch 2, worin das Hydroxylamin eine Verbindung der Formel I ist, wobei g 1 bedeutet und worin die Reste $T_1$ und $T_2$ zusammen zwischen 6 und 36 C-Atome besitzen.

4. Zusammensetzung gemäss Anspruch 3, worin $T_2$ Wasserstoff bedeutet und $T_1$ $C_6$-$C_{12}$Cycloalkyl ist; oder worin $T_1$ und $T_2$ die gleiche Bedeutung besitzen und $C_4$-$C_{18}$Alkyl, Cyclohexyl oder Benzyl sind.

5. Zusammensetzung gemäss Anspruch 4, worin das Hydroxylamin der Formel I N,N-Di-tert.-butylhydroxylamin, N,N-Di-n-octylhydroxylamin, N-Cyclohexylhydroxylamin, N-Cyclododecylhydroxylamin, N,N-Dicyclohexylhydroxylamin oder N,N-Dibenzylhydroxylamin oder eine Mischung der obengenannten Hydroxylamine ist.

6. Zusammensetzung gemäss Anspruch 2, worin das Hydroxylaminderivat eine Verbindung der Formel I ist, wobei g 2 bedeutet, $T_1$ Cyclohexyl ist und $T_2$ p-Xylylen bedeutet; oder worin das Hydroxylaminderivat eine Verbindung der Formel II ist, wobei n 2 bedeutet, $R_1$ Wasserstoff ist, und $R_2$ Sebacoyl darstellt; oder worin das Hydroxylaminderivat eine Verbindung der Formel VIII ist, wobei n 1 bedeutet, $T_4$ n-Octadecyl ist, M und Y Carbonyl darstellen und worin die Reste $T_5$ und $T_6$ zusammen Pentamethylen sind.

7. Zusammensetzung gemäss Anspruch 1, worin die Komponente b) ein phenolisches Antioxidans ist.

8. Zusammensetzung gemäss Anspruch 7, worin in Komponente b) zusätzlich eine organische Phosphorverbindung enthalten ist.

9. Zusammensetzung gemäss Anspruch 7, worin in Komponente b) zusätzlich ein sterisch gehindertes Amin als Lichtstabilisator enthalten ist.

10. Zusammensetzung gemäss Anspruch 7, worin die Komponente b) zusätzlich einen Thiosynergisten enthält.

11. Zusammensetzung gemäss Anspruch 7, worin die Komponente b) zusätzlich einen Ultraviolettabsorber enthält.

12. Zusammensetzung gemäss Anspruch 9, worin Komponente b) zusätzlich eine organische Phosphorverbindung enthält.

13. Zusammensetzung gemäss Anspruch 12, worin die Komponente b) zusätzlich einen Thiosynergisten enthält.

14. Zusammensetzung gemäss Anspruch 9, worin Komponente b) zusätzlich einen Ultraviolettabsorber enthält.

15. Zusammensetzung gemäss Anspruch 11, worin die Komponente b) zusätzlich eine organische Phosphorverbindung enthält.

16. Zusammensetzung gemäss Anspruch 1, worin die Komponente b) ein sterisch gehindertes Amin als Lichtstabilisator enthält.

17. Zusammensetzung gemäss Anspruch 1, worin Komponente b) das Metallsalz einer Fettsäure ist.

18. Zusammensetzuzng gemäss Anspruch 17 enthaltend als Komponente b) zusätzlich ein phenolisches Antioxidans.

19. Verfahren zum Stabilisieren gesättigter Polyolefine oder deren Mischungen gegen oxidativen, thermischen oder strahlungsinduzierten Abbau, dadurch gekennzeichnet, dass man dem Substrat
a) einen Stabilisator oder eine Stabilisatormischung ausgewählt aus der Gruppe der phenolischen Antioxidantien, der sterisch gehinderten Amine, der Ultraviolettabsorber, der organischen Phosphorverbindungen, der Metallsalze von Fettsäuren oder der Thiosynergisten, und
b) mindestens ein Hydroxylaminderivat oder eine Mischung von Hydroxylaminderivaten zusetzt, mit der Massgabe, dass Komponenten a) und b) nicht identisch sind.

20. Verwendung von Polyolefinzusammensetzungen gemäss Anspruch 1.

FO 7.3/ACK/gs*

0138767

Nummer der Anmeldung

Europäisches Patentamt

**EUROPÄISCHER RECHERCHENBERICHT**

EP 84 81 0483

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-1 316 341 (CIBA-GEIGY) * Seite 1, Zeilen 39-56; Anspruch 21; Seite 3, Zeilen 8-43 * | 1-20 | C 08 K 5/00<br>C 08 K 5/32<br>C 08 K 5/34<br>C 08 L 23/02 |
| X | GB-A-1 263 400 (J.R. GEIGY AG) * Ansprüche * | 1-20 | |
| X | EP-A-0 070 388 (AMERICAN CYANAMID COMP.) * Ansprüche 1,4,8; Seite 4, Zeilen 21-22; Seite 6, Zeile 34 - Seite 8, Zeile 4 * | 1-20 | |
| X | EP-A-0 001 402 (HOECHST AG) * Ansprüche 1,6; Seite 6, Zeile 5 - Seite 7, Zeile 34 * | 1-20 | **RECHERCHIERTE SACHGEBIETE (Int. Cl.4)** |
| X | FR-A-2 320 293 (SANKY COMPANY) * Ansprüche 1,6; Seite 10, Zeilen 25-38; Seite 13, Zeile 12 - Seite 15, Zeile 32 * | 1-20 | C 08 K<br>C 08 L |
| X | GB-A-1 333 424 (CIBA-GEIGY LTD.) * Ansprüche 1,17,21; Seite 2, Zeile 26 * | 1-20 | |
| X | CH-A- 577 011 (CIBA-GEIGY AG) * Ansprüche; Spalte 4, Zeilen 1-20; Spalte 10, Zeilen 33,47,49,51 * | 1-20 | |

Der vorliegende Recherchenbericht wurde für alle Patentansprüche erstellt.

| Recherchenort | Abschlußdatum der Recherche | Prüfer |
|---|---|---|
| DEN HAAG | 16-01-1985 | HOFFMANN K.W. |

**KATEGORIE DER GENANNTEN DOKUMENTEN**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82